# EUROPÄISCHE PATENTSCHRIFT

(11) **EP 3 558 739 B1**
(45) Veröffentlichungstag und Bekanntmachung des Hinweises auf die Patenterteilung: **18.11.2020**
(21) Anmeldenummer: 17828836.1
(22) Anmeldetag: 12.12.2017
(51) Int. Cl.: B60K 6/48, B60K 6/387, B60K 6/547, B60K 6/405

(54) **ANTRIEBSMODUL UND ANTRIEBSANORDNUNG FÜR EIN KRAFTFAHRZEUG**
DRIVE MODULE AND DRIVE ASSEMBLY FOR A MOTOR VEHICLE
MODULE D'ENTRAÎNEMENT ET SYSTÈME D'ENTRAÎNEMENT POUR UN VÉHICULE À MOTEUR

(30) Priorität: 23.12.2016 DE 102016125627
(43) Veröffentlichungstag der Anmeldung: 30.10.2019
(73) Patentinhaber: Schaeffler Technologies AG & Co. KG, 91074 Herzogenaurach (DE)
(72) Erfinder: REIMNITZ, Dirk, 77815 Bühl (DE)
(86) Internationale Anmeldenummer: PCT/DE2017/101065
(87) Internationale Veröffentlichungsnummer: WO 2018/113840

(56) Entgegenhaltungen:
- EP-A1- 1 710 113
- DE-A1- 4 311 697
- US-B1- 6 474 428

## Beschreibung

Die Erfindung betrifft ein Antriebsmodul gemäß dem Oberbegriff des Anspruchs 1 für ein Kraftfahrzeug, wie einen Pkw, einen Lkw oder ein anderes Nutzfahrzeug, zum Ankoppeln an eine Verbrennungskraftmaschine, sowie eine Antriebsanordnung für ein Kraftfahrzeug mit dem erfindungsgemäßen Antriebsmodul.
Eine bevorzugte Ausgestaltungsform des Antriebsmoduls ist ein Hybridmodul.
Ein Hybridmodul umfasst üblicherweise eine Anschlusseinrichtung zur mechanischen Ankopplung einer Verbrennungskraftmaschine, eine Trennkupplung, mit der Drehmoment von der Verbrennungskraftmaschine auf das Hybridmodul übertragbar ist und mit der das Hybridmodul von der Verbrennungskraftmaschine trennbar ist, einen elektrische Maschine zur Erzeugung eines Antriebsdrehmoments mit einem Rotor, sowie einer Doppelkupplungsvorrichtung, mit der Drehmoment von der elektrischen Maschine und/ oder von der Trennkupplung auf einen Antriebsstrang übertragbar ist. Die Doppelkupplungsvorrichtung umfasst eine erste Teilkupplung und eine zweite Teilkupplung. Jeder angeordneten Kupplung ist jeweils ein Betätigungssystem zugeordnet.
Die elektrische Maschine ermöglicht das elektrische Fahren, Leistungszuwachs zum Verbrennungsmotorbetrieb und Rekuperieren. Die Trennkupplung und deren Betätigungssystem sorgen für das Ankuppeln oder Abkuppeln des Verbrennungsmotors.

Wenn ein Hybridmodul mit einer Doppelkupplung derart in einen Antriebsstrang integriert wird, dass sich das Hybridmodul in Drehmomentübertragungsrichtung zwischen Verbrennungsmotor und Getriebe befindet, müssen im Fahrzeug der Verbrennungsmotor, das Hybridmodul, die Doppelkupplung mit ihren Betätigungssystemen und das Getriebe hinter- oder nebeneinander angeordnet werden.
Ein derart positioniertes Antriebsmodul wird auch als P2- Hybridmodul bezeichnet. Eine solche Anordnung führt jedoch sehr häufig zu erheblichen Bauraumproblemen. Zurzeit geht deswegen die Entwicklung dahin, das sogenannte P2-Hybridmodul und die Doppelkupplung nicht mehr als zwei separate Aggregaten auszuführen und nebeneinander anzuordnen, sondern ein Hybridmodul mit integrierter Doppelkupplung zu entwickeln. Dies ermöglicht es, alle erforderlichen Komponenten noch kompakter und funktionaler anzuordnen.
Um ein sehr kompaktes Hybridmodul mit integrierter Doppelkupplung zu realisieren, besteht ein vorteilhaftes Bauprinzip darin, die Trennkupplung und die beiden Teilkupplungen der Doppelkupplung direkt nebeneinander anzuordnen. Ein weiteres vorteilhaftes Bauprinzip besteht darin, Kupplungen ganz oder teilweise radial innerhalb der elektrischen Maschine anzuordnen, so wie es auch z.B. in der DE 10 2010 003 442 A1 und in der DE10 2015 223 330 A1 offenbart ist, die zudem lehrt, dass Betätigungssysteme zwischen der Trennkupplung und der Hauptkupplung angeordnet sind.
Wenn ein Hybridmodul eine integrierte Doppelkupplungsvorrichtung aufweist, müssen im Fahrzeug der Verbrennungsmotor, das Hybridmodul und die
Doppelkupplungsvorrichtung mit ihren Betätigungssystemen und das Getriebe hinter- oder nebeneinander angeordnet werden.
Dies führt sehr häufig zu erheblichen Bauraumproblemen.

Aus der DE 10 2011 117 781 A1 ist eine Kupplungsanordnung und ein Hybrid-Doppelkupplungsgetriebe bekannt, welches ebenfalls eine radial verschachtelte Bauweise aufweist. Es ist dabei die Doppelkupplungsvorrichtung abschnittsweise im vom Rotor der elektrischen Maschine umschlossenen Raum angeordnet. Eine Trennkupplung zum Anschluss des Hybridmoduls an eine Verbrennungskraftmaschine ist im Wesentlichen neben dem Rotor der elektrischen Maschine positioniert, sodass die Doppelkupplungsvorrichtung ebenfalls abschnittsweise in den von der Trennkupplung umschlossenen Raum hineinragt. Diese Bauweise erzielt ein hinsichtlich der axialen Länge kompaktes Modul. Nachteilig daran ist jedoch die große radiale Erstreckung und das dadurch bedingte Erfordernis einer entsprechend stabilen Lagerung insbesondere von rotierenden Elementen der Trennkupplung.

Die DE 10 2016 207 104 A1 lehrt ein Hybridmodul zum Ankoppeln einer Verbrennungskraftmaschine, dessen Anschlusseinrichtung, Trennkupplung und wenigstens eine der beiden Teilkupplungen der Doppelkupplungsvorrichtung im Wesentlichen hintereinander angeordnet sind. Dabei ist wenigstens eine der Kupplungen Trennkupplung, erste Teilkupplung und zweite Teilkupplung der Doppelkupplungsvorrichtung zumindest abschnittsweise innerhalb des vom Rotor der elektrischen Maschine umschlossenen Raums angeordnet. Ein Betätigungssystem zur Betätigung der Trennkupplung sowie ein erstes Betätigungssystem zur Betätigung der ersten Teilkupplung der Doppelkupplungsvorrichtung sind auf der Seite der elektrischen Maschine angeordnet, die der Anschlusseinrichtung zugewandt ist. Das derart ausgeführte Hybridmodul weist ein insgesamt geringes Volumen auf.

Um die Spulen des Elektromotors bzw. der elektrischen Maschine zur Einstellung des jeweils benötigten Drehmomentes bzw. der jeweils benötigten Drehzahl richtig ansteuern und bestromen zu können, muss die Steuereinheit der elektrischen Maschine die momentane Lage bzw. Winkelposition des Rotors der elektrischen Maschine kennen. Die Lagebestimmung erfolgt über Winkellagegebern, die die Position eines mit dem Rotor verbunden Bauteils relativ zu einem mit dem Stator der elektrischen Maschine verbundenen Bauteils erfassen. Insbesondere für Hybridsysteme besteht die besondere Herausforderung darin, diese Sensoren möglichst kompakt und funktionssicher anzuordnen.

Aus der US 6,474,428 B1 ist ein Antriebsmodul gemäß dem Oberbegriff des Anspruchs 1 bekannt.

Der vorliegenden Erfindung liegt die Aufgabe zugrunde, ein Antriebsmodul, insbesondere ein Hybridmodul, sowie eine mit dem Antriebsmodul ausgestattete Antriebsanordnung für ein Kraftfahrzeug zur Verfügung zu stellen, die bei geringen Herstellungskosten eine einfache und zuverlässige Steuerbarkeit gewährleisten.

Diese Aufgabe wird durch das erfindungsgemäße Antriebsmodul nach Anspruch 1 sowie durch die erfindungsgemäße Antriebsanordnung nach Anspruch 7 gelöst. Vorteilhafte Ausgestaltungen des Antriebsmoduls sind in den Unteransprüchen 2 bis 6 angegeben.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Begriffe radial, axial und Umfangsrichtung beziehen sich im Rahmen der vorliegenden Erfindung immer auf die Drehachse des Antriebsmoduls.

Das erfindungsgemäße Antriebsmodul ist insbesondere ein Hybridmodul für ein Kraftfahrzeug zum Ankoppeln einer Verbrennungskraftmaschine und umfasst zumindest die folgenden Komponenten:
- eine elektrische Maschine mit einem Rotor zur Erzeugung eines Antriebsdrehmoments,
- einen mit dem Rotor im Wesentlichen rotationsfest verbundenen Rotorträger, der zumindest radial rotatorisch gelagert ist, und
- einen Winkellagegeber zur Messung der Winkelposition des Rotorträgers.

Der Winkellagegeber ist derart angeordnet, dass mit ihm die Winkellage des Rotorträgers oder eines im Wesentlichen rotationsfest mit dem Rotorträger verbundenen Bauteils des Antriebsmoduls in Bezug zu einem gehäusefest angeordneten Bauteil, wie z.B. einer Stützwand, detektierbar ist, die zur radialen Abstützung der rotatorischen Lagerung des Rotorträgers dient, wobei der Winkellagegeber ein Geberelement sowie ein Detektionselement aufweist, wobei das Detektionselement an der Stützwand angeordnet ist und das Geberelement an bzw. auf der Zwischenwelle oder dem Rotorträger angeordnet ist, dadurch gekennzeichnet, dass der Rotorträger mittels einer mehrere einzelne Lager aufweisenden Rotorträgerlagerung rotatorisch gelagert ist, und das Geberelement und das Detektionselement zwischen Lagern der Rotorträgerlagerung angeordnet sind.

Insbesondere ist also das Antriebsmodul ein Hybridmodul, umfassend:
- eine Trennkupplung, mit der Drehmoment von der Verbrennungskraftmaschine auf das Hybridmodul übertragbar ist, und mit der das Hybridmodul von der Verbrennungskraftmaschine trennbar ist,
- eine Zwischenwelle zur Übertragung eines Drehmomentes von der Verbrennungskraftmaschine zum Rotorträger, wobei die Zwischenwelle mit dem Rotorträger im Wesentlichen rotationsfest verbunden ist und die Zwischenwelle radial rotatorisch gelagert ist.

Vorzugsweise ist das Geberelement ein Geberrad, welches auf der Zwischenwelle bzw. auf oder an dem Rotorträger angeordnet ist.

Weiterhin kann das Antriebsmodul derart ausgestaltet sein, dass es ein Gehäuse aufweist und der Winkellagegeber ein Geberelement sowie ein Detektionselement aufweist, wobei das Antriebsmodul weiterhin eine Kupplungseinrichtung, insbesondere eine Trennkupplung oder Doppelkupplungsvorrichtung mit einer ersten Teilkupplung und einer zweiten Teilkupplung umfasst, mit der Drehmoment von der elektrischen Maschine und/ oder von der Trennkupplung auf einen Antriebsstrang übertragbar ist. Zudem umfasst das Antriebsmodul ein Kupplungsbetätigungssystem zur Betätigung der Kupplungseinrichtung des Antriebsmoduls, welches in einem Gehäuseelement angeordnet ist, wobei das Detektionselement in das Gehäuseelement des Kupplungsbetätigungssystems integriert ist.

In spezieller Ausführungsform des Winkellagegebers ist das Geberelement ein integraler Bestandteil des Bauelementes, an dem es angeordnet ist. So kann zum Beispiel die Zwischenwelle selbst durch Integration geeigneter Formelemente abschnittsweise das Geberelement, gegebenenfalls auch in Form eines Geberrades, ausbilden.

In alternativer Ausführungsform ist vorgesehen, dass der Rotorträger mittels einer Rotorträgerlagerung rotatorisch gelagert ist und dass das Geberelement und das Detektionselement in bzw. an der Rotorträgerlagerung angeordnet bzw. ausgebildet sind, sodass Rotorträgerlagerung und Winkellagegeber zusammen eine Baueinheit bilden. Diese Baueinheit kann zum Beispiel vormontierbar sein. Der Winkellagegeber kann dabei sogar direkt an einem Lagerring eines Lagers der Rotorträgerlagerung (z.B. dem Lagerinnenring oder Lageraußenring) befestigt sein und die Position des anderen Lagerrings oder die Position eines am anderen Lagerring befestigten Geberelementes erfassen.

Zur Lösung der Aufgabe wird außerdem eine Antriebsanordnung für ein Kraftfahrzeug mit einer Verbrennungskraftmaschine und einem erfindungsgemäßen Antriebsmodul sowie mit einem Getriebe zur Verfügung gestellt, wobei das Antriebsmodul mit der Verbrennungskraftmaschine und dem Getriebe mechanisch über Kupplungen des Antriebsmoduls verbunden ist.

Die oben beschriebene Erfindung des Antriebsmoduls wird nachfolgend anhand eines Hybridmoduls vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Die beiliegenden Zeichnungen zeigen alle unterschiedlichen Ausführungsformen eines erfindungsgemäßen Hybridmoduls im Halbschnitt.

Es ist dabei dargestellt in
Fig. 1: ein Hybridmodul mit aufgedrückter Trennkupplung
Fig. 2: ein Hybridmodul mit zugedrückter Trennkupplung
Fig. 3: ein Hybridmodul mit auf der Kurbelwelle abgestützter aufgedrückter Trennkupplung
Fig. 4: ein Hybridmodul mit auf der Kurbelwelle abgestützter zugedrückter Trennkupplung
Fig. 5: ein Hybridmodul mit auf der Kurbelwelle abgestützter zugedrückter Mehrscheibentrennkupplung
Fig. 6: ein Hybridmodul mit zugedrückter Trennkupplung mit drei Reibflächen einer ersten Ausführungsform
Fig.7: ein Hybridmodul mit zugedrückter Trennkupplung mit drei Reibflächen einer zweiten Ausführungsform
Fig. 8: ein Hybridmodul mit zugedrückter Trennkupplung mit drei Reibflächen einer dritten Ausführungsform
Fig. 9: ein Hybridmodul mit zugedrückter Trennkupplung mit drei Reibflächen einer vierten Ausführungsform
Fig. 10: ein Hybridmodul mit Zwischenwellenlagerung auf der Stützwand und der Kurbelwelle
Fig. 11: ein Hybridmodul mit Dichtung zur Trennung eines Trockenraums von einem Nassraum einer ersten Ausführungsform
Fig. 12: ein Hybridmodul mit Dichtung zur Trennung eines Trockenraums von einem Nassraum einer zweiten Ausführungsform
Fig. 13: ein Hybridmodul mit Dichtung zur Trennung eines Trockenraums von einem Nassraum einer dritten Ausführungsform
Fig. 14: ein Hybridmodul mit Winkellagegeber einer ersten Ausführungsform
Fig. 15: ein Hybridmodul mit Winkellagegeber einer zweiten Ausführungsform
Fig. 16: ein Hybridmodul mit Winkellagegeber einer dritten Ausführungsform.

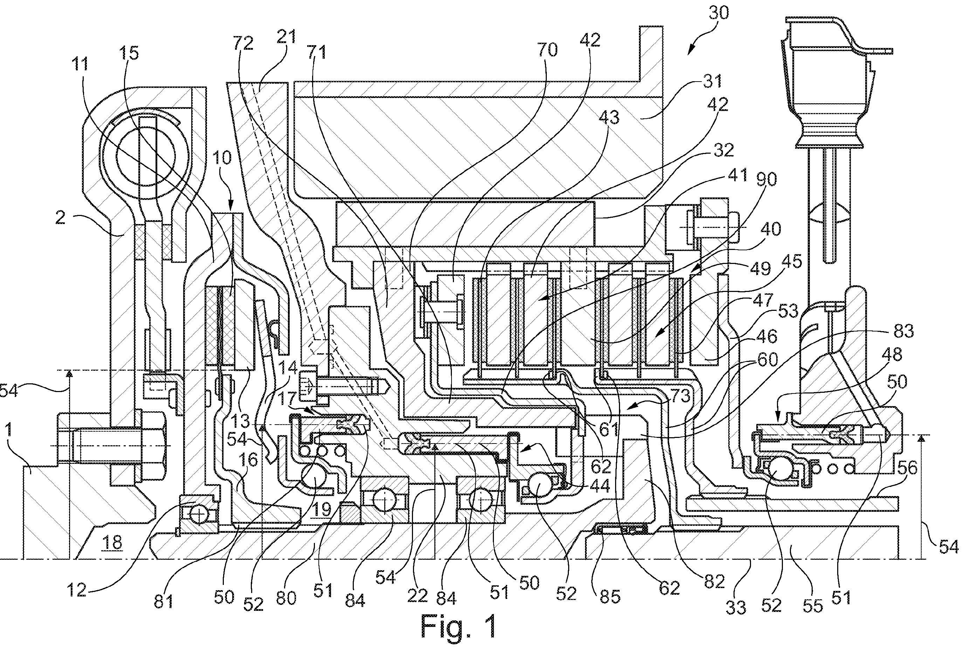

Im Folgenden wird zunächst der allgemeine Aufbau eines erfindungsgemäßen Hybridmoduls anhand der Figur 1 erläutert.

Das Hybridmodul ist dazu ausgestaltet, an eine Kurbelwelle 1 eines angrenzenden (nicht in den beiliegenden Figuren dargestellten) Verbrennungsaggregates angeschlossen zu werden. Zu diesem Zweck wird üblicherweise ein Zweimassenschwungrad 2 eingesetzt, welches rotatorisch fest mit der Kurbelwelle 1 verbunden wird sowie mit einer Trennkupplung 10 des Hybridmoduls.
Eine Gegendruckplatte 11 der Trennkupplung 10 ist dabei rotatorisch fest mit dem Zweimassenschwungrad 2 verbunden. Die Gegendruckplatte 11 ist mittels eines Stützlagers 12 entweder auf einer Zwischenwelle 80 gelagert, oder auf der Kurbelwelle 1.

Die Trennkupplung 10 wird im Wesentlichen durch die Gegendruckplatte 11 sowie eine Anpressplatte 13 und wenigstens eine zwischen der Anpressplatte 13 und der Gegendruckplatte 11 positionierte Kupplungsscheibe 15 gebildet. Des Weiteren umfasst die Trennkupplung 10 ein Trennkupplungsbetätigungssystem 17 sowie ein Federelement 14, dessen axiale Kraft die Anpressplatte gegen die Kupplungsscheibe drückt und so die Kupplungsscheibe zwischen der Anpressplatte und der Gegendruckplatte eingeklemmt und derart für eine reibschlüssigen Verbindung zwecks Drehmoment-Übertragung sorgt. Das in die Kupplungsscheibe 15 eingetragene Drehmoment wird von dieser über ein Übertragungselement 16 und eine Steckverzahnung 81 in die Zwischenwelle 80 eingetragen.
Derart lässt sich ein Drehmoment von einer Antriebsseite 18 von der Kurbelwelle 1 an eine Abtriebsseite 19 auf die Zwischenwelle 80 übertragen.

Des Weiteren umfasst das Hybridmodul eine Stützwand 21, die sich in den Innenraum des Hybridmoduls erstreckt. Die Stützwand 21 weist einen sich in axialer Richtung erstreckenden Abschnitt 22 auf, der ein integraler Bestandteil des Materials der Stützwand 21 sein kann, oder auch durch ein extra Bauteil ausgeführt sein kann.
Mit einem Gehäuse des Hybridmoduls ist ein Stator 31 einer elektrischen Maschine 30 bzw. eines Elektromotors fest verbunden. Innerhalb des Stators 31 ist der Rotor 32 der elektrischen Maschine rotierbar angeordnet. Der Rotor 32 sowie auch die Zwischenwelle 80 rotieren um eine gemeinsame Rotationsachse 33.

Zur rotatorischen Verbindung der Zwischenwelle 80 mit dem Rotor 32 weist das Hybridmodul einen Rotorträger 70 auf. An den Rotorträger 70 ist als eine Drehmomentübertragungseinrichtung eine Doppelkupplungsvorrichtung 40 des Hybridmoduls gekoppelt.
Das Hybridmodul ist daher derart ausgestaltet, dass ein von der Kurbelwelle 1 zur Verfügung gestelltes Drehmoment über die geschlossene Trennkupplung 10, von dieser auf die Zwischenwelle 80, von dieser auf den Rotorträger 70 und von diesem auf die Doppelkupplungsvorrichtung 40 übertragen werden kann.
Die Doppelkupplungsvorrichtung 40 wiederum ist rotatorisch über Trägereinrichtungen 60 mit einer ersten Getriebeeingangswelle 55 sowie mit einer zweiten Getriebeeingangswelle 56 gekoppelt, sodass Drehmoment von der seitenweise geschlossenen Doppelkupplungsvorrichtung 40 auf die Getriebeeingangswellen 55,56 übertragen werden kann.
Selbstverständlich ist auch eine Drehmoment-Übertragung in umgekehrter Richtung möglich.

Demzufolge kann durch das Öffnen der Trennkupplung 10 das angeschlossene Verbrennungsaggregat von der elektrischen Maschine 30 rotatorisch abgekoppelt werden. Dies ermöglicht es, dass Verbrennungsaggregat beim elektrischen Fahren des Hybridfahrzeugs abzuschalten. Das Drehmoment, dass am Rotor 32 der elektrischen Maschine 30 anliegt, kann über die Doppelkupplungsvorrichtung 40 bei deren seitenweiser Schließung und die Getriebeeingangswellen 55,56 auf ein hier nicht dargestelltes Getriebe übertragen werden, und zwar unabhängig davon, ob das zur Verfügung gestellte Drehmoment von der elektrischen Maschine 30 oder von dem angekoppelten Verbrennungsaggregat erzeugt wird.

Die Doppelkupplungsvorrichtung 40 umfasst eine erste Teilkupplung 41 mit einer Anpressplatte 42 und einer Kupplungsscheibe 43. Des Weiteren umfasst die Doppelkupplungsvorrichtung 40 eine zweite Teilkupplung 45 mit einer Anpressplatte 46 und einer Kupplungsscheibe 47. Beide Teilkupplungen sind als Mehrscheibenkupplungen bzw. Lamellenkupplungen aufgebaut und verfügen über weitere Scheiben bzw. Lamellen und weitere Zwischenplatten bzw. Zwischenlamellen. Jeder der beiden Teilkupplungen 41,45 ist jeweils ein Betätigungssystem zugeordnet, nämlich der ersten Teilkupplung 41 ein erstes Betätigungssystem 44 und der zweiten Teilkupplung 45 ein zweites Betätigungssystem 48. Die beiden Teilkupplungen 41,45 weisen eine gemeinsame, zentral angeordnete Gegendruckplatte 49 auf, die die Kupplungsscheiben 43,47 bei Betätigung einer der beiden Teilkupplungen 41,45 stützen und für den Reibschluss sorgen.

Jedes Betätigungssystem 17, 44,48 weist jeweils eine Kolben-Zylinder-Einheit 50 auf, in der der jeweilige Kolben entlang einer Vorschubrichtung im dazugehörigen Zylinder verschiebbar ist. Um diese translatorische Bewegung auf eine jeweilige Kupplung zu übertragen sind Betätigungslager 52 angeordnet, die diese translatorische Bewegung bzw. Kraftübertragung vom rotatorisch feststehenden Betätigungssystem auf die drehbare Kupplung ermöglichen. In den meisten Ausgestaltungen des Hybridmoduls wirken die Betätigungslager auf oftmals als Drucktöpfe ausgestaltete Federelemente 53, die dann auf die entsprechende Kupplung wirken, wie zum Beispiel auf eine Anpressplatte.

Zwecks Lagerung der Zwischenwelle 80 hat der Rotorträger 70 einen radialen Abschnitt 72, an den sich ein axialer Abschnitt 71 anschließt.
Diese axiale Abschnitt 71 nimmt eine Zwischenwellenlagerung 84 zur radialen Lagerung und vorzugsweise auch zur axialen Lagerung der Zwischenwelle 80 auf. Diese Zwischenwellenlagerung 84 kann durch mehrere Wälzlager ausgebildet sein, oder auch durch eine kompakte Lagereinheit. Des Weiteren umfassen einige Ausführungen des erfindungsgemäßen Hybridmoduls noch eine zusätzliche Lagerung 85 zur Abstützung von Endbereichen der Zwischenwelle 80.
Die Zwischenwelle 80 ist über eine zumindest rotatorisch feste Verbindung 83 mit dem Rotorträger 70 verbunden. Zu diesem Zweck weist die Zwischenwelle 80 einen radialen Abschnitt 82 auf, der sich vorzugsweise von dem Endbereich der Zwischenwelle 80 erstreckt, der dem Anschluss an die Trennkupplung 10 gegenüberliegt. An diesem radialen Abschnitt 82 ist die Verbindung 83 zum Rotorträger 70 realisiert.
Zur Betätigung der ersten Teilkupplung 41 der Doppelkupplungsvorrichtung 40 ist deren Betätigungssystem 44 mit einem als Zuganker ausgestaltetem Verbindungselement 90, der auch als Drucktopf bezeichnet wird, mit der Anpressplatte 42 der ersten Teilkupplung 41 gekoppelt. Um diese Funktion zu ermöglichen sowie die Übertragung des Drehmomentes von der Zwischenwelle 80 auf den Rotorträger 70 zu realisieren sind im Rotorträger 70 sowie auch im Zuganker 90 Aussparungen 73 angeordnet, die auch als Durchgriffe bezeichnet werden können. Diese Aussparungen sind vorzugsweise alternierend angeordnet. Sie ermöglichen den Durchgriff des Rotorträgers 70 durch den Zuganker 90 und umgekehrt dessen Laschen durch den Rotorträger 70, so dass eine translatorische Bewegung des Zugankers 90 zwecks Übertragung der translatorischen Bewegung auf die Anpressplatte 42 und demzufolge die Betätigung der ersten Teilkupplung 41 erfolgen kann. Derart kann das erste Betätigungssystem 44 das auf der einen Seite des Rotorträgers 70 angeordnet ist, die erste Teilkupplung 41, die auf der anderen Seite des Rotorträgers 70 angeordnet ist, betätigen.

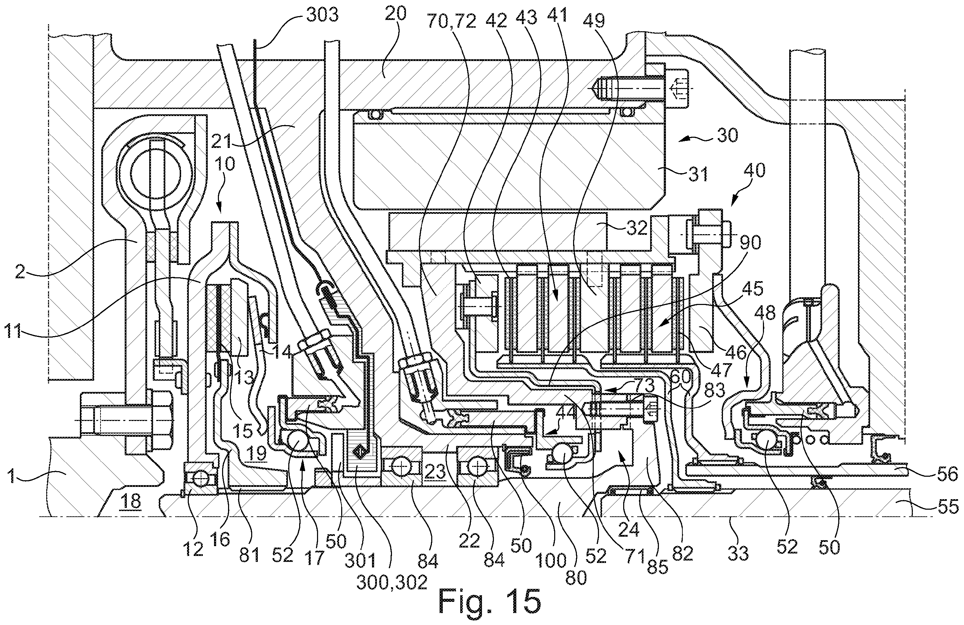

Die in Figur 15 dargestellte Ausführungsform ist demgegenüber abweichend ausgestaltet. Hier sind mehrere am Umfang des axialen Abschnitts des Rotorträgers 72 angeordnete Aussparungen 73 vorhanden. Die tragenden Bereiche zwischen den Aussparungen 73 sind als Fügestellen zwischen dem Rotorträger 70 und der Zwischenwelle 80 ausgeführt. Dadurch kann der ebenfalls mit Aussparungen 73 versehene Zuganker 90 radial bis zum ersten Betätigungssystem 44 verlängert werden. Bei der Montage werden die zwischen den Aussparungen 73 des Rotorträgers 70 vorhandenen Laschen und/oder die zwischen den Aussparungen 73 und dem Material der Zwischenwelle 80 befindlichen Laschen durch die Aussparungen 73 des Zugankers 90 gesteckt. Danach werden der Rotorträger 70 und die Zwischenwelle 80 zusammengefügt und dauerhaft miteinander verbunden, zum Beispiel mittels einer Verschraubung.

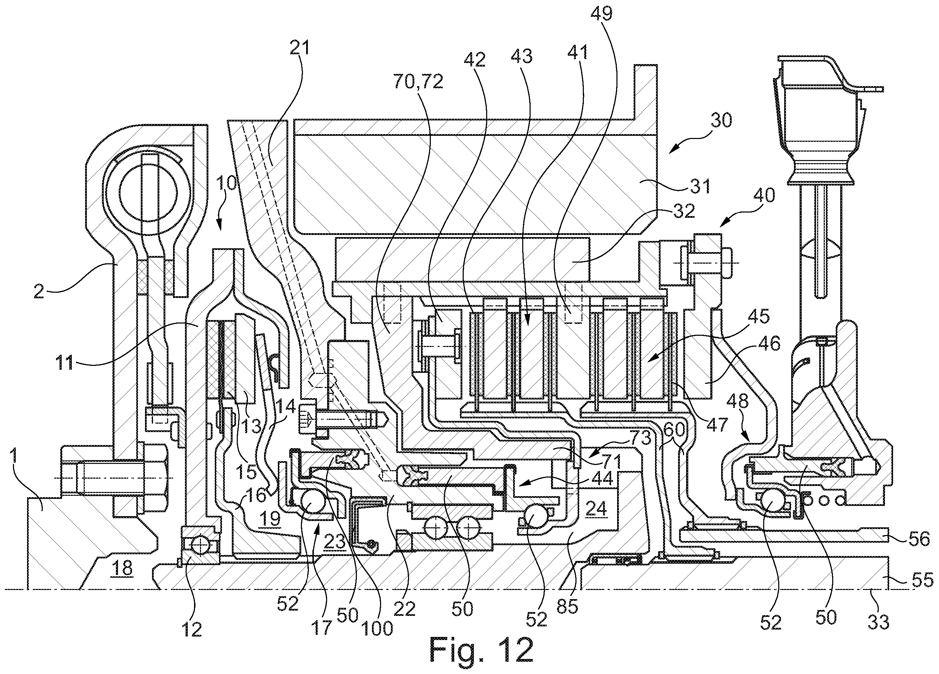

Die in den Figuren 1 bis 12 gezeigten Ausführungsformen der Trennkupplung sind alle derart ausgestaltet, dass die radiale Erstreckung einer jeweiligen Kolben-Zylinder-Einheit in Bezug zu einer Rotationsachse des Rotors einen größeren radialen Abstand aufweist als eine Umlaufbahn eines jeweiligen Betätigungslagers zur Rotationsachse des Rotors. Dabei ist aber die radiale Erstreckung der Kolben-Zylinder-Einheiten geringer als die der für den Reibschluss sorgenden Elemente der Trennkupplung 10 sowie der Doppelkupplungsvorrichtung 40. Die Betätigungssysteme 17, 44,48 sind alle axial nebeneinander angeordnet, wobei leichte radiale Versätze in Bezug zueinander möglich sind. D.h., dass keines der drei Betätigungssysteme 17, 44,48 in den Figuren 1-12 radial außerhalb eines anderen Betätigungssystems angeordnet ist. Demzufolge muss auch kein einem jeweiligen Betätigungssystem zugeordnetes Betätigungslager 52 radial außerhalb eines anderen Betätigungslagers 52 angeordnet sein, sodass sämtliche Betätigungslager 52 mit relativ geringen Durchmessern ausführbar sind und dementsprechend geringe Schleppverluste erzeugen.

In den meisten Ausführungsformen des Hybridmoduls ist die Trennkupplung 10 nahe an der Kurbelwelle 1 des Verbrennungsaggregats angeordnet, so dass die Zwischenwelle 80 starr mit dem Rotor 32 der elektrischen Maschine 30 verbunden werden kann. Dies ermöglicht den Einsatz einer radial sehr weit innen sitzenden Zwischenwellenlagerung 84, die gleichzeitig auch den Rotor 32 bzw. den Rotorträger 70 abstützen kann.

Die Stützwand 21 befindet sich zwischen der Trennkupplung 10 und der Doppelkupplungsvorrichtung 40. An der Stützwand 21 stützen sich das Trennkupplungsbetätigungssystem 17 sowie das erste Betätigungssystem 44 für die erste Teilkupplung 41 und die Zwischenwellenlagerung 84 ab. Die Zwischenwellenlagerung 84 befindet sich dabei an der radial inneren Seite des sich in axialer Richtung erstreckenden Abschnitts 22 der Stützwand 21. Die Stützwand 21 wird lediglich von der Zwischenwelle 80 durchdrungen. Die Betätigungssysteme 17,44 können dabei im jeweiligen oder auch in einem gemeinsamen Bauteil angeordnet sein, welches mit einer geeigneten mechanischen Verbindung mit einem radial verlaufenden Bestandteil der Stützwand 21 verbunden wird. In alternativer Ausgestaltung sind die Betätigungssysteme 17,44 direkt in der Stützwand 21 angeordnet bzw. aufgenommen. Vorzugsweise sind die Betätigungssysteme derart ausgestaltet, dass sie hydraulisch oder pneumatisch betrieben werden, wobei das jeweilige zum Betrieb notwendige Fluid durch Kanäle in der Stützwand dem jeweiligen Betätigungssystem zugeführt wird, oder durch separate Leitungen, wie z.B. in Figur 15 dargestellt.
Das erfindungsgemäße Hybridmodul ist dabei nicht auf den Einsatz pneumatischer oder hydraulischer Betätigungssystem eingeschränkt, sondern diese können auch auf einer mechanischen, elektromechanischen oder semihydraulischen Wirkungsweise basieren. Die in den Figuren dargestellten Betätigungssysteme sind als CSC (concentric slave cylinder) ausgeführt.
Aufgrund der gegenüberliegenden Anordnung des Trennkupplungsbetätigungssystems 17 sowie des ersten Betätigungssystems 44 an der Stützwand 21 wirken die von diesen Betätigungssystemen aufgebrachten Kräfte entgegengesetzt, so dass sie sich teilweise aufheben können, wodurch Spannungen im Hybridmodul verringert werden. Das zweite Betätigungssystem 48 für die zweite Teilkupplung 45 der Doppelkupplungsvorrichtung 40 ist auf der dem Getriebe zugewandten Seite des Hybridmoduls angeordnet.
Das erfindungsgemäße Hybridmodul ist derart ausgeführt, dass die Durchmesser der Betätigungslager 52 geringer sind als die Durchmesser der Kolben-Zylinder-Einheiten 50 der Betätigungssysteme 17, 44,48. Dementsprechend sind die Betätigungslager 52 relativ klein ausgeführt und bewirken nur geringe durch den Lagerbetrieb verursachte energetische Verluste.

Der Rotor 32, der Rotorträger 70 sowie die Zwischenwelle 80 bilden im axialen Halbschnitt durch das Hybridmodul einen S-förmigen Querschnitt aus. Dadurch wird eine starke radiale Verschachtelung der einzelnen Aggregate im Hybridmodul möglich, wodurch sich der zur Verfügung gestellte Bauraum optimal ausnutzen lässt. Der Rotor 32 der radiale Abschnitt des Rotorträgers 72 und der axiale Abschnitt des Rotorträgers 71 umschließen dabei einen großen Teil der Doppelkupplungsvorrichtung 40. Der axiale Abschnitt des Rotorträgers 71, der radiale Abschnitt der Zwischenwelle 82 sowie der im Wesentlichen axial verlaufende Grundkörper der Zwischenwelle 80 umschließen fast vollständig das Betätigungssystem 44 für die erste Teilkupplung.

Die Doppelkupplungsvorrichtung 40 ist in den dargestellten Ausführungsformen als Mehrscheibenkupplung oder Lamellenkupplung ausgeführt. Bei beiden Teilkupplungen 41,45 der Doppelkupplungsvorrichtung sind die Anpressplatten 42,46 über Rückstellfedern, zum Beispiel Blattfedern, zentriert. Die Zwischenplatten bzw. Zwischenlamellen sind an den mit dem Rotor 32 verbundenen Rotorträger 70 bzw. ein daran fest angeordnetes Bauteil rotatorisch fest angeschlossen. Die Kupplungsscheiben 43,47 der beiden Teilkupplungen 41,45 sind jeweils auf eine auch als Innenlamellenträger bezeichneten Trägereinrichtung 60 geführt und zentriert. Diese Trägereinrichtungen 60 übertragen das Kupplungsmoment der jeweiligen Teilkupplung 41,45 auf die Getriebeeingangswellen 55,56. Zur Fixierung der jeweiligen axialen Position der Trägereinrichtungen gibt es unterschiedliche Ansätze. Figur 1 zeigt eine Ausführungsform, bei der die Trägereinrichtung 60 axial fest mit der jeweils in Wirkrichtung der jeweiligen Anpresskraft hintersten Kupplungsscheibe 43,47 verbunden ist. Zu diesem Zweck weist die jeweilige Trägereinrichtung 60 einen radialen Vorsprung 61 auf, der sich zur radial äußeren Seite erstreckt. An diesem radialen Vorsprung 61 ist die jeweilige hinterste Kupplungsscheibe 43,47 mittels einer mechanischen Verbindung 62 fest angeschlossen. Dies bewirkt, dass sich die Trägereinrichtung 60 in der Steckverzahnung einer jeweiligen Getriebeeingangswelle 55,56 derart weit axial verlagern können, wie sich auch die hinterste Kupplungsscheibe 43,47 axial verlagern kann. Somit sind die Trägereinrichtungen 60 verliersicher mit der Doppelkupplungsvorrichtung 40 verbunden. Zur Montage des Hybridmoduls mit einem Getriebe werden die Trägereinrichtungen auf die Steckverzahnungen der Getriebeeingangswellen 55,56 gesteckt.

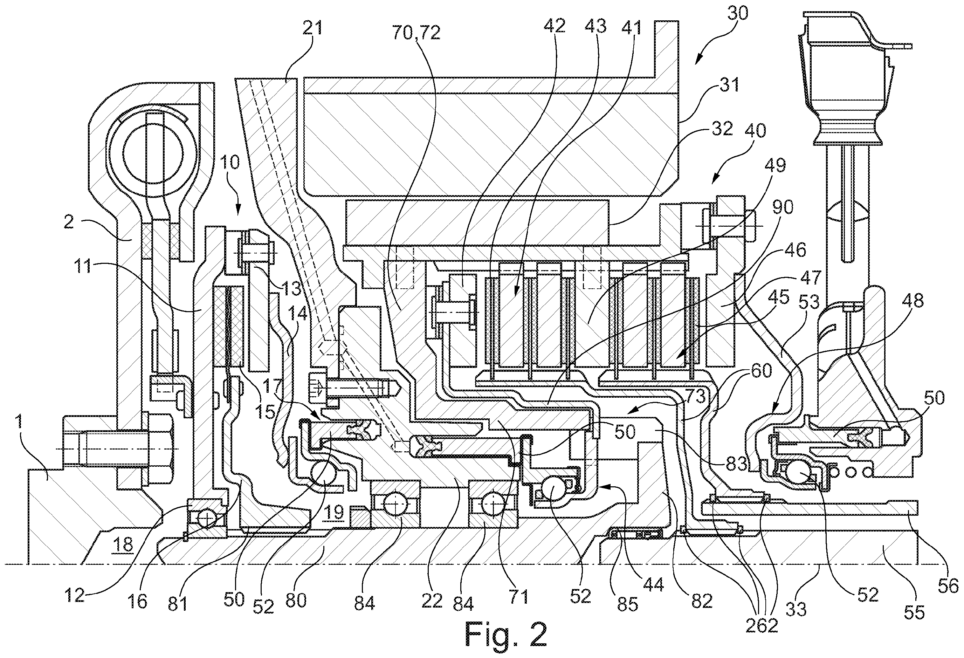

Figur 2 zeigt eine alternative Ausgestaltung des Hybridmoduls mit axialer Fixierung der Trägereinrichtungen 60. Hier sind die Trägereinrichtungen 60 durch axial sperrende Sicherungselemente 262, wie zum Beispiel Wellensicherungsringe, die in der Steckverzahnung einer jeweiligen Getriebeeingangswelle 55,56 positioniert sind, axial fixiert. Zur Montage des Hybridmoduls an ein Getriebe werden demzufolge die Trägereinrichtungen 60 auf die Getriebeeingangswellen 55,56 aufgesetzt und dort fixiert, bevor die restliche Verbindung des Hybridmoduls mit dem Getriebe erfolgt. Während des Zusammenschiebens von Hybridmodul und Getriebe finden sich die Verzahnungskonturen der Kupplungsscheiben 43,47 sowie der Trägereinrichtung 60. Zwecks Erleichterung dieser Montage kann die Doppelkupplungsvorrichtung 40 mit Transportsicherungselementen, die die Teilkupplungen 41,45 ganz oder teilweise schließen, ausgestattet sein, oder es kann eine Vorzentrierungseinrichtung für die Kupplungsscheiben 43,47 vorgesehen werden. Insofern die Trägereinrichtung in 60 auf die Getriebeeingangswellen 55,56 montiert werden, bevor sie mit der Doppelkupplungsvorrichtung 40 verbunden werden, muss der Drucktopf bzw. das Federelement 53, das die Anpressplatte 46 der zweiten Teilkupplung 45 beaufschlagt, getriebeseitig vormontiert werden. Dieser Drucktopf bzw. dieses Federelement 53 wird auf das zweite Betätigungssystem 48 gesteckt bevor die Trägereinrichtungen 60 auf die Getriebeeingangswellen 55,56 montiert werden. Das Federelement 53 bzw. der Drucktopf weist dazu einen zylindrischen Bereich auf, mit dem es auf dem zweiten Betätigungssystem 48 vorzentriert werden kann. Wenn im Zuge der Montage des Hybridmoduls an das Getriebe diese zusammengefügt werden, kommt der Drucktopf bzw. das Federelement 53 mit der Anpressplatte 46 der zweiten Teilkupplung 45 in Kontakt, die sie noch genauer zentriert und im Betrieb der
Doppelkupplungsvorrichtung 40 positioniert. Die Vorzentrierung ist dabei so ausgelegt, dass sie im komplett montierten Zustand ihre Wirkung verliert und somit keine unerwünschte Reibstelle ausbildet.

Dadurch, dass die Zwischenwelle mit dem Rotorträger 70 fest verbunden ist, wirkt die Zwischenwellenlagerung 84 auch als Rotorlagerung. Aufgrund der Befestigung der Kupplungsscheiben der Doppelkupplungsvorrichtung 40 am Rotorträger 70 stützt sich somit auch die Doppelkupplungsvorrichtung 40 teilweise über den Rotorträger 70 an der Zwischenwelle 80 und demzufolge über die Zwischenwellenlagerung 84 ab. Aufgrund der radialen Verschachtelung der einzelnen Bauelemente ist die Doppelkupplungsvorrichtung 40 zumindest teilweise in dem radial äußeren Bereich der Zwischenwellenlagerung 84 angeordnet, sodass sich von der Doppelkupplungsvorrichtung 40 aufgebrachte radial wirkende Kräfte nicht als ungünstige Kippmomente auf die Zwischenwellenlagerung 84 auswirken.

Bei den in den Figuren 1, 2 und 10-15 dargestellten Ausführungsformen des Hybridmoduls ist die Trennkupplung 10 mittels eines Stützlagers 12 auf der Zwischenwelle 80 gelagert. Dies bewirkt, dass auf die Trennkupplung 10 wirkende Betätigungskräfte nicht auf die Kurbelwelle 1 übertragen werden, sondern in die Zwischenwelle 80 eingetragen und von dort über die Zwischenwellenlagerung 84 in die Stützwand 21 eingeleitet werden. Insbesondere bei einer zugedrückten Trennkupplung 10, wie sie in Figur 2 dargestellt ist, muss das Trennkupplungsbetätigungssystem 17 ständig eine große axiale Kraft erzeugen. Hier bietet die Abstützung der Trennkupplung 10 auf dem Stützlager 12 auf der Zwischenwelle 80 den Vorteil, dass axial eingetragene Kräfte nicht über die Gleitlager der Kurbelwelle 1 abgestützt werden müssen. Dementsprechend können die Kurbelwellenlager geringer dimensioniert werden, was zu geringeren lagerbetriebsbedingten Verlusten an der Kurbelwelle 1 führt.
Zudem führt das Stützlager 12 keine Relativ-Drehbewegung aus, wenn die Trennkupplung 10 geschlossen ist, was beim Betrieb des Verbrennungsaggregates der Fall ist. Lediglich das Lager des Trennkupplungsbetätigungssystems 17 wird in einem solchen Fall gedreht, so dass es hier nur zu geringen Schleppverlusten kommen kann. Insofern jedoch das Verbrennungsaggregat ausgeschaltet ist, existiert hier auch keine Relativ-Drehbewegung. Somit treten im Betätigungslager des Trennkupplungsbetätigungssystems 17 keine Verluste auf, wenn das Fahrzeug lediglich mit der elektrischen Maschine angetrieben wird.
Lediglich in dem Fall, in dem beide Motoren drehen und eine Differenzdrehzahl zwischen den Motoren besteht, drehen sich das Stützlager 12 sowie auch das Betätigungslager des Trennkupplungsbetätigungssystems 17 gleichzeitig. Diese Betriebsphasen sind jedoch relativ kurz. Lang andauernde Fahrzustände erfolgen meist durch den Betrieb nur eines Antriebsaggregats, sodass auch immer nur ein Lager rotatorisch bewegt wird.

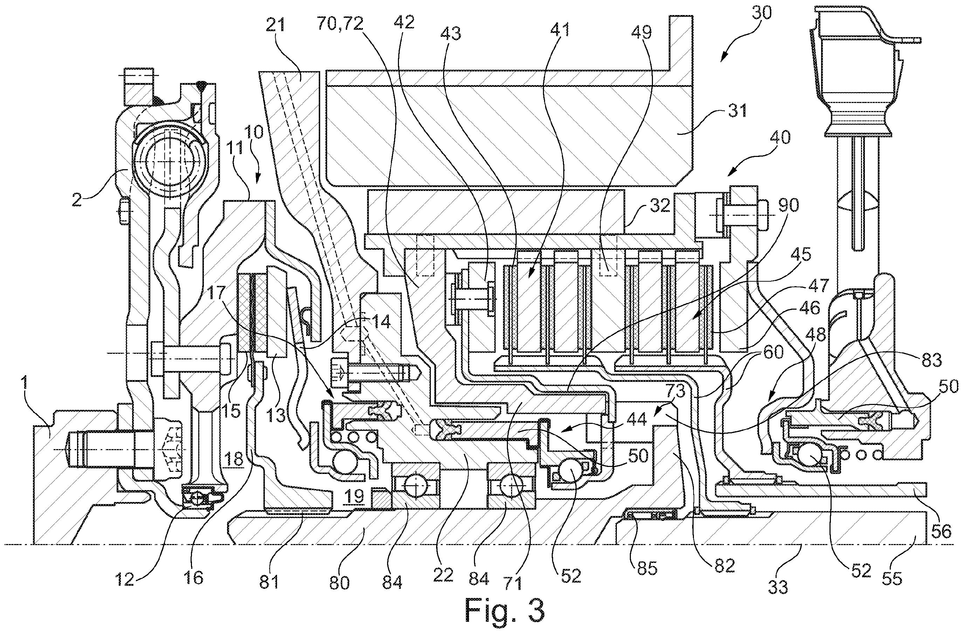

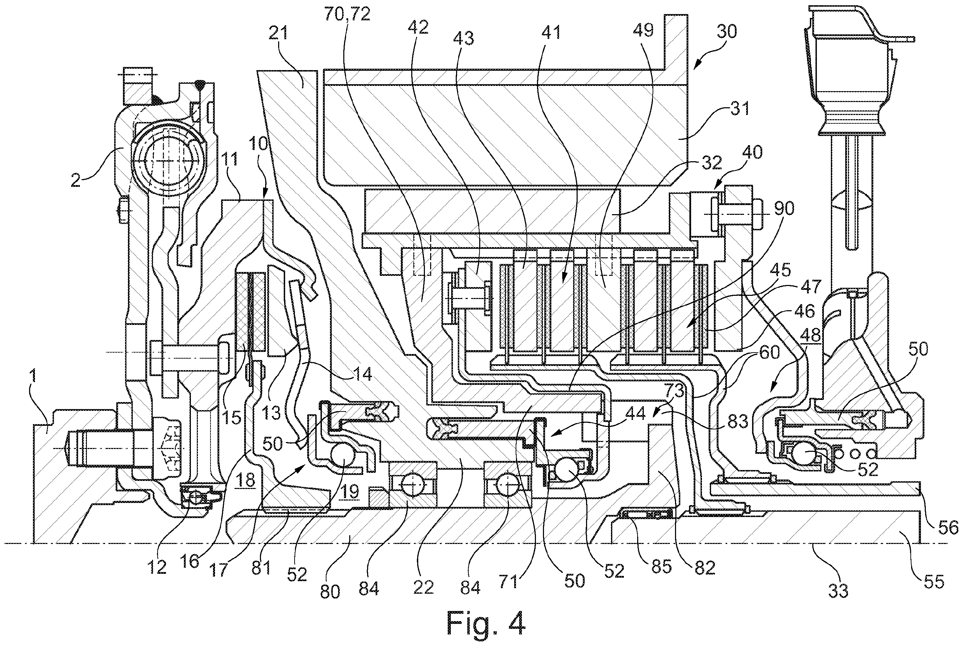

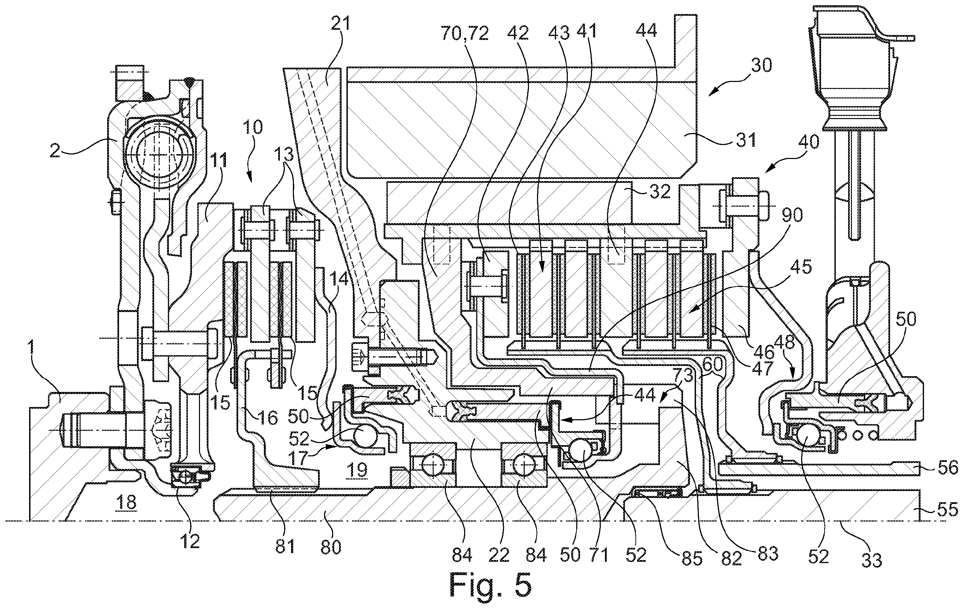

Die in den Figuren 1 und 3 dargestellten Ausführungsformen weisen eine aufgedrückte Trennkupplung 10 auf. Die in Figur 3 gezeigte Ausführungsform weist eine Trennkupplung 10 auf, die mittels eines Stützlagers 12 als ein Bestandteil der Sekundärseite des Zweimassenschwungrades 2 auf der Kurbelwelle 1 abgestützt ist. Demzufolge hat diese Ausführungsform kein Stützlager, das die Trennkupplung 10 auf der Zwischenwelle 80 abstützt. In den Fahrzuständen, in denen der Verbrennungsmotor ausgeschaltet ist und das Fahrzeug rein elektrisch fährt, fallen somit keine lagerbetriebsbedingten Verluste an der Trennkupplung 10 an. In der Situation, in der das Verbrennungsaggregat Drehmoment über die Trennkupplung 10 auf die Zwischenwelle 80 überträgt, wird die vom Trennkupplungsbetätigungssystem 17 ausgeübte axiale Kraft auf der drehenden Kurbelwelle 1 abgestützt. Allerdings ist bei einer aufgedrückten Trennkupplung 10 die axiale Kraft relativ gering, die das Trennkupplungsbetätigungssystem 17 im geschlossenen Zustand auf die Trennkupplung ausübt, sodass die axiale Belastung der Kurbelwelle 1 zulässig ist. Dieses Konzept bietet sich für Hybridfahrzeuge an, die für hohe elektrische Fahranteile ausgelegt sind.
Insofern die Trennkupplung 10 als zugedrückte Kupplung ausgeführt ist und auf der Kurbelwelle 1 gelagert ist, kann die erforderliche Einrückkraft für die Trennkupplung 10 auch über eine Hebelübersetzung, wie sie in Figur 4 dargestellt ist, und/oder durch mehrere Kupplungsscheiben bzw. Reibelamellen, wie in Figur 5 dargestellt, auf einem niedrigen Niveau gehalten werden.

In einer weiteren Ausgestaltung des Hybridmoduls weist dieses eine zugedrückte Trennkupplung 10 auf, die mit ihrer Antriebsseite 18 an eine Kurbelwelle 1 angeschlossen ist und mit ihrer Abtriebsseite 19 an die Zwischenwelle 80 angeschlossen ist.

Diese Trennkupplung 10 weist mehrere Anpresselemente 201, 211, 212 auf, wobei die Anpresselemente 201, 211, 212 in einer ungerade Anzahl vorliegen und axial verlagerbar sind. Des Weiteren hat die Trennkupplung 10 mehrere Kupplungsscheiben 220,230, wobei eine der Kupplungsscheiben 120 axial fixiert ist, und wobei die Anpresselemente 201, 211, 212 auf der Antriebsseite abgestützt oder abstützbar sind und eine der Anpresskraft bzw. axial wirkenden Kraft 240 entgegen gerichtete Stützkraft 250 sowie die axial fixierte Kupplungsscheibe 120 auf der Abtriebsseite 19 der Trennkupplung 10 abgestützt oder abstützbar sind.

Das bedeutet, dass die Trennkupplung 10 an einer ersten Anpressplatte 200 als erstes Anpresselement 201 eine erste Reibfläche aufweist, und an einer zweiten Anpressplatte 210 an gegenüberliegenden Seiten als zweites Anpresselement 211 und drittes Anpresselement 212 zwei weitere Reibflächen aufweist.
Wenn die Trennkupplung 10 geschlossen ist, bewirkt das Trennkupplungsbetätigungssystem 17 eine axial wirkende Kraft 240, die auf die erste Anpressplatte 200 übertragen wird und von dieser über ein erstes Anpresselement 201 auf die erste Kupplungsscheibe 220 übertragen wird. Die erste Kupplungsscheibe 220 überträgt die axial wirkende Kraft 240 wiederum auf die zweite Anpressplatte 210, die axial verschiebbar angeordnet ist. Hier wird die axial wirkende Kraft 240 auf die der ersten Kupplungsscheibe 220 zugewandte Seite aufgebracht, die das zweite Anpresselement 211 der Trennkupplung 10 als weitere Reibfläche ausbildet. Aufgrund der axialen Verschiebung der zweiten Anpressplatte 210 überträgt diese die axial wirkende Kraft 240 über ein drittes Anpresselement 212 als weitere Reibfläche, welches dem zweiten Anpresselement 211 an der zweiten Anpressplatte 210 gegenüberliegt, auf die axial fixierte Kupplungsscheibe 120, die die zweite Kupplungsscheibe 230 der Trennkupplung 10 ausbildet. Dadurch werden beim Schließen der Trennkupplung alle drei Reibflächen aneinandergepresst, so dass Drehmoment übertragen werden kann.
Die mit der Kurbelwelle 1 des Verbrennungsaggregats rotatorisch über das Zweimassenschwungrad 2 bzw. Drehschwingungsdämpfer verbundene angetriebene Seite der Trennkupplung 10 umfasst im Wesentlichen die axial verlagerbare erste Anpressplatte 200 mit einer Reibfläche sowie die ebenfalls axial verlagerbare Zwischenplatte bzw. zweite Anpressplatte 210 mit 2 Reibflächen. Die Abtriebsseite, über die das Drehmoment der Zwischenwelle 80 zugeführt wird und somit der elektrischen Maschine 30 und der Doppelkupplungsvorrichtung 40, umfasst im Wesentlichen die erste Kupplungsscheibe 220 mit zwei Reibflächen und die axial fixierte bzw. hinsichtlich ihrer axialen Verlagerung begrenzte zweite Kupplungsscheibe 230,120 mit einer Reibfläche.
Aufgrund der ungeraden Anzahl der Reibflächen bzw. der an den Anpressplatten 200,210 realisierten Anpresselemente stützen sich die axial wirkende Kraft 240 und die der axial wirkenden Kraft 240 zur Erzeugung eines statischen Gleichgewichts entgegen wirkende Stützkraft 250 auf derselben Seite der Trennkupplung 10 ab, nämlich hier auf der Abtriebsseite 19.
Demzufolge müssen in einer derartigen Ausführungsform des Hybridmoduls bei geschlossener Trennkupplung 10 die von der Trennkupplungsbetätigungseinrichtung 17 erzeugten axialen Kräfte nicht auf die Kurbelwelle 1 übertragen werden, sondern werden auf der Zwischenwelle 80 bzw. einem mit der Zwischenwelle axial verbundenen Bauteil axial abgestützt. Dabei erfolgt diese Abstützung der axialen Kräfte ohne Stützlager. Somit können auch keine von einem Stützlager erzeugten Schleppverluste auftreten.
Die Konzeption mit einer ungeraden Anzahl von Anpresselementen bzw. Reibflächen hat den Vorteil, dass die vom Betätigungssystem in die mit dem Antrieb verbundene Baugruppe der Kupplung eingeleiteten Kräfte auf der mit dem Abtrieb verbundenen Baugruppe abgestützt werden können. Mit dem gleichen Konzept können auch Kräfte von der Abtriebsseite auf die Antriebsseite übertragen werden.
Damit die Trennkupplung 10 beim Öffnen an allen drei Reibflächen bzw. zwischen den Anpressplatten und den Kupplungsscheiben lüftet, sind die axial verschiebbaren Bauelemente der Trennkupplung 10 federnd mit dem Zweimassenschwungrad 2 bzw. der Kurbelwelle 1 verbunden. Diese federnde Anbindung sorgt dafür, dass die beiden Anpressplatten 200, 210 in Richtung des Trennkupplungsbetätigungssystems 17 geschoben werden, wenn dessen Kraftwirkung nachlässt. Weiterhin umfasst die Trennkupplung 10 eine Öffnungseinrichtung 260 die zumindest zwischen den beiden Anpressplatten 200,210 ausgeführt ist damit die zwischen den beiden Anpressplatten 200,210 angeordnete erste Kupplungsscheibe 220 ausreichend weit von den Anpressplatten 200,210 entfernt wird bzw. gelüftet wird. Bei geschlossener Trennkupplung 10 werden die von der Öffnungseinrichtung 260 bewirkten Kräfte vom Trennkupplungsbetätigungssystem 17 überwunden, sodass die Reibflächen aneinandergepresst werden. Sinkt die vom Trennkupplungsbetätigungssystem 17 bewirkte axiale Kraft ausreichend weit ab, bewirkt die Öffnungseinrichtung 260 und die federnde Verbindung zum Zweimassenschwungrad 2 die Öffnung der Trennkupplung 10. Dabei wird auch der Kolben der Kolben-Zylinder-Einheit 50 des Trennkupplungsbetätigungssystems 17 zurückgeschoben.
Um das Schleppmoment der Trennkupplung 10 im offenen Zustand so gering wie möglich zu halten, sollte die Trennkupplung 10 Endanschläge aufweisen, an die die Öffnungseinrichtung 260 die Anpressplatten 200,210 jeweils schieben kann und die die Endlagen dieser Anpressplatten 200,210 im geöffneten Zustand definieren. Ebenfalls sollte der Kolben des Trennkupplungsbetätigungssystems 17 einen solchen Endanschlag aufweisen, der gleichzeitig als Referenz für die Verlagerung der axial beweglichen Bauteile der Trennkupplung zwecks deren Öffnung zu verwenden ist. Die Endlage des Kolbens bzw. des Trennkupplungsbetätigungssystems legt somit die Endlage der Anpressplatte 200, 211 im geöffneten Zustand fest und sorgt dadurch dafür, dass der Reibkontakt zwischen der zweiten Anpressplatte 210 und der axial fixierten Kupplungsscheibe 120 im richtigen Abstand gelüftet wird.

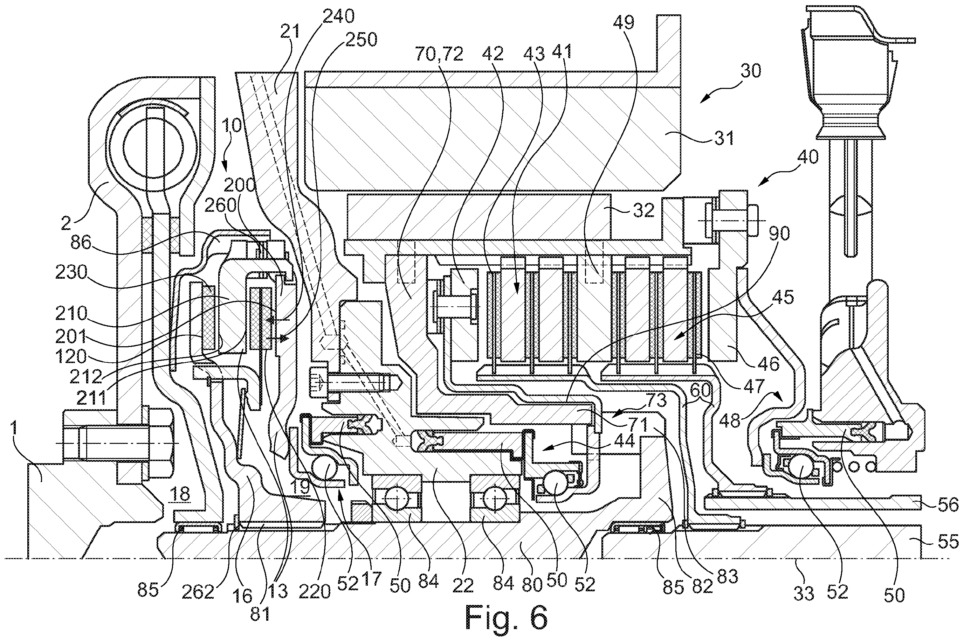

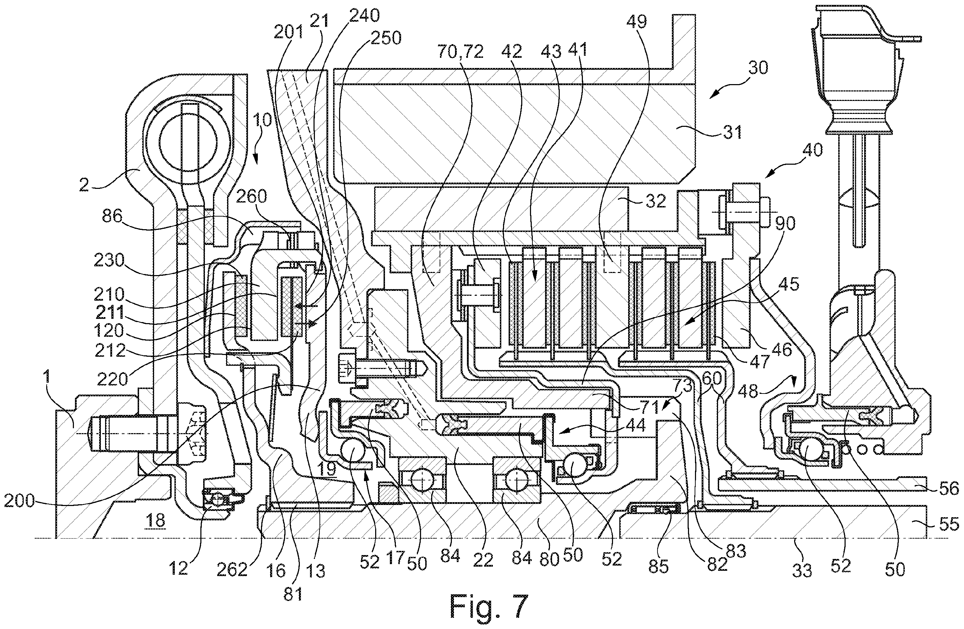

Die Elemente der Trennkupplung 10, die die Anpressplatten 200,210 mit der axial wirkenden Kraft 240 beaufschlagen und deren axiale Verlagerung bewirken, können gegebenenfalls die Bauelemente sein, die auch das Drehmoment des Verbrennungsmotors über die Kurbelwelle 1 übertragen, wie zum Beispiel Blattfedern, Tellerfedern und/oder Mitnehmerringe.
Ebenfalls können zwischen den Anpressplatten 200,210 elastische Bauelemente eingesetzt werden, die sowohl für die axiale Verlagerung der Bauteile untereinander als auch für die Bauteilzentrierung und die Drehmomentübertragung genutzt werden, wie zum Beispiel ebenfalls Blattfedern und/oder Tellerfedern.
Die erste Kupplungsscheibe 220 ist ebenfalls axial verschiebbar und rotatorisch fest mit der Zwischenwelle 80 verbunden. Es können auch hier elastische Beziehungsweise federnde Bauteile eingesetzt werden sowie auch Endanschläge, um die erste Kupplungsscheibe 220 sicher zu lüften.
Die genannten elastischen Bauteile können auch für die radiale Zentrierung der Trennkupplung 10 in Bezug zur Zwischenwelle 80 sowie dem
Zweimassenschwungrad 2 genutzt werden. Die Trennkupplung 10 stützt sich dann radial auf der Sekundärseite des Zweimassenschwungrades 2 ab. Diese Sekundärseite des Zweimassenschwungrades 2 kann sich dann durch ein radialwirkendes zusätzliches Lager 85 auf der Zwischenwelle 80 abstützen, sowie in Figur 6 dargestellt, oder auf der Primärseite des Zweimassenschwungrades 2, die mit der Kurbelwelle 1 verbunden ist, so wie es in den Figuren 7,8 und 9 dargestellt ist.

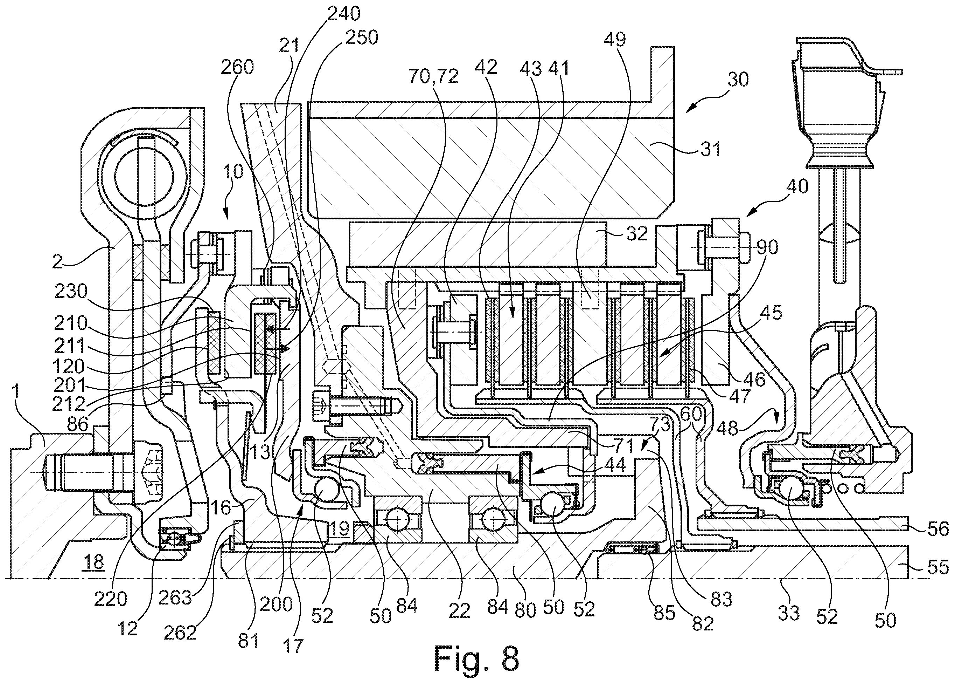

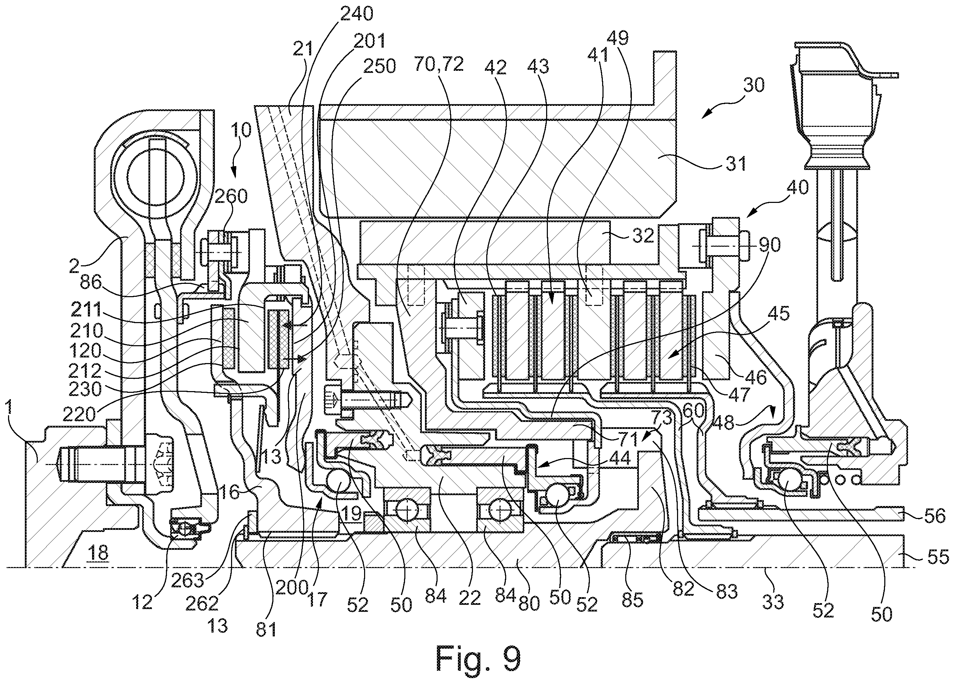

Für die Montage des Hybridmoduls an dem Verbrennungsaggregat ist es sinnvoll, eine Steckverzahnung 86 oder eine andere axial verfügbare Verbindung zwischen der Antriebsseite der Trennkupplung 10 und dem Zweimassenschwungrad 2 oder einem anderen Ausgleichselement vorzusehen, so wie es in den Figuren 6-9 dargestellt ist. So können zum Beispiel die federnden Elemente, die die Anpressplatten 200,210 axial verlagern können, und/oder die Elemente, die zur Drehmomentübertragung zwischen dem Zweimassenschwungrad 2 und der Trennkupplung 10 dienen, eine an dem Zweimassenschwungrad 2 angeordnete oder mittige oder eine auf Seiten der Trennkupplung 10 angeordnete Steckverbindung aufweisen oder über eine solche Steckverbindung direkt oder indirekt am Zweimassenschwungrad 2 befestigt werden, so wie es in den Figuren 6-9 dargestellt ist. Dies ermöglicht es, das Zweimassenschwungrad 2 zuerst auf die Kurbelwelle 1 aufzusetzen und zu fixieren, beispielsweise durch Aussparungen in der Sekundärseite des Zweimassenschwungrades 2 hindurch. Die Trennkupplung 10 selbst kann auf die Zwischenwelle 80 des Hybridmoduls montiert werden. Dazu wird ein mit der axial fixierten Kupplungsscheibe 120 fest verbundenes Übertragungselement 16 auf die Zwischenwelle 80 geschoben und axial gesichert, beispielsweise durch ein Sicherungselement 262 in Form eines Wellensicherungsringes. Damit die Trennkupplung 10 bzw. deren Kupplungsscheiben 220,230 im richtigen Abstand zum Trennkupplungsbetätigungssystem 17 angeordnet werden, können eine oder mehrere Einstellscheiben 263 zwischen dem Übertragungselement 16 und dem axial wirkenden Sicherungselement 262 vorgesehen sein, so wie es in den Figuren 8 und 9 dargestellt ist. Zur Vorzentrierung der Anpressplatten 200,210 im noch nicht an das Zweimassenschwungrad 2 angeschlossenen Zustand der Trennkupplung 10 können radiale Vorzentrieranschläge zwischen den Anpressplatten 200,210 und der Stützwand 21, so wie in den Figuren 8 und 9 dargestellt, bzw. dem Trennkupplungsbetätigungssystem 17 oder den Kupplungsscheiben 220,230 vorgesehen sein.

Wenn das Verbrennungsaggregat, an dem das Zweimassenschwungrad 2 bereits angeschlossen ist, mit dem Hybridmodul, welches bereits die Trennkupplung 10 aufweist, zusammengefügt wird, entsteht eine Verbindung zwischen der Trennkupplung 10 und dem Zweimassenschwungrad 2 durch die oben beschriebene Steckverbindung. Wenn die Trennkupplung mit dem Zweimassenschwungrad 2 verbunden ist, erfolgt die genaue radiale Zentrierung der Anpressplatten 200,210 über das Zweimassenschwungrad 2 und an den Vorzentrieranschlägen werden die Reibstellen aufgelöst. Dadurch wird ein extra Lager zur Aufnahme der axial zwischen der Antriebs- und Abtriebsbaugruppe wirkenden Kräfte überflüssig, was die Energieeffizienz einer solchen Kupplungseinrichtung bzw. eines damit ausgestalteten Hybridmoduls steigert. Dabei ist die Anzahl der Anpresselemente bzw. Reibflächen nicht auf die dargestellte Anzahl von drei beschränkt, sondern es können auch fünf, sieben oder mehr realisiert werden. In entsprechender Weise ist dann natürlich auch die Anzahl der Kupplungsscheiben zu erhöhen.

In den dargestellten Ausführungsformen ist die Zwischenwelle 80 ein zentrales Bauteil, welches der Abstützung von mehreren Bauteilen bzw. Baugruppen dient. Die Zwischenwellenlagerung 84 muss axialen Kräfte von mehreren Betätigungssystemen 17, 44,48 abstützen, alle auf ihr befestigten Bauteile zentrieren und in Position halten und deren Massenträgheitsmomente sowie Kreiselkräfte aufnehmen. Insofern auch der Rotor 31 der elektrischen Maschine 30 mittels der Zwischenwelle 80 gelagert ist, muss die Zwischenwellenlagerung 84 sehr genau mit möglichst wenig Lagerspiel erfolgen. Zu diesem Zweck ist die Anordnung einer zusätzlichen Lagerung 85 neben der Zwischenwellenlagerung 84 sinnvoll. Die Zwischenwellenlagerung 84 kann zum Beispiel über zwei Schrägkugellager in O-Anordnung realisiert sein. Dabei können zwei separate Wälzlager angeordnet sein oder auch eine kompakte Baugruppe aus mehreren Lagern. Zur exakten Lagerung der Zwischenwelle sollte diese möglichst auf einem Gehäuseelement bzw. einem mit einem Gehäuse bzw. dem Stator 31 der elektrischen Maschine 30 fest verbundenen Bauteil wie zum Beispiel der Stützwand 21 gelagert sein. Zusätzlich oder alternativ dazu kann die Zwischenwelle 80 auch auf anderen Bauteilen abgestützt oder gelagert sein, sowie andere Bauteile abstützen bzw. lagern. So kann sich zum Beispiel die erste Getriebeeingangswelle 55 an der Zwischenwelle 80 mit einer zusätzlichen Lagerung 85 abstützen.

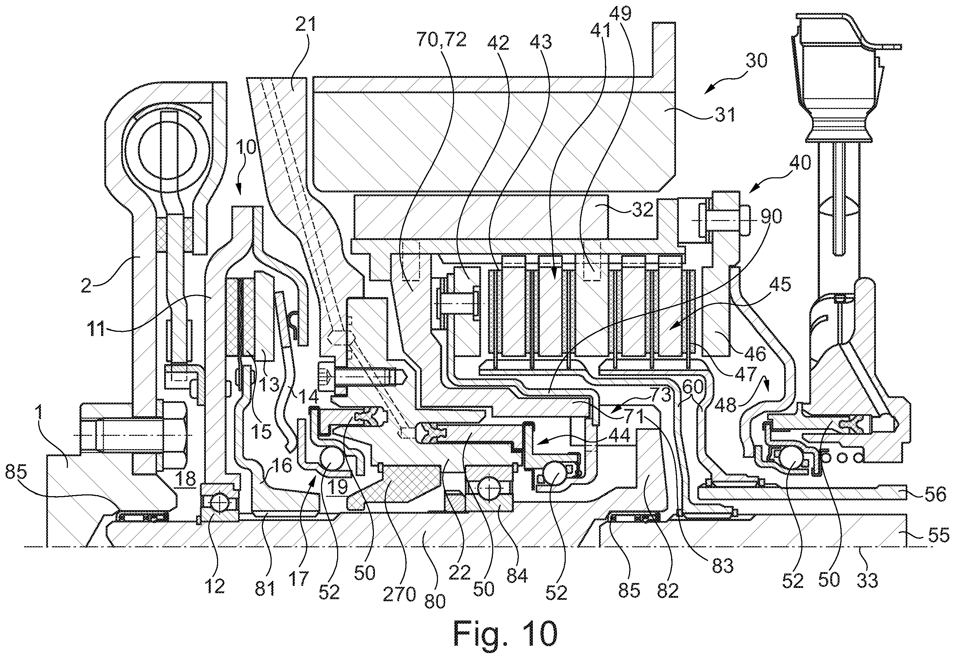

Eine besondere Form der Zwischenwellenlagerung 84 ist in Figur 10 dargestellt. Die Zwischenwelle 80 ist hier nur mit einem einreihigen Lager, einem Rillenkugellager, mit der Stützwand 21 bzw. mit dem an der Stützwand 21 befestigten Gehäuse des Trennkupplungsbetätigungssystems 17 verbunden. Dieses Lager ist als ein Festlager ausgestaltet, so das eine weitere Lagerstelle als Loslager ausgeführt ist. Dieses Loslager ist hier als ein Nadellager ausgeführt, welches eine zusätzliche Lagerung 85 ausbildet. Diese zusätzliche Lagerung 85 kann radiale Kräfte zwischen der Zwischenwelle 80 und der Kurbelwelle 1 übertragen. Diese Abstützung der Zwischenwelle 80 auf der Kurbelwelle 1 hat den Vorteil, dass bei geschlossener Trennkupplung 10 und gleicher Drehzahl des Verbrennungsaggregates wie der elektrischen Maschine 30, keine Differenzdrehzahl zwischen Kurbelwelle 1 und Zwischenwelle 80 auftritt. Demzufolge treten in diesem Fahrzustand nur lagerbetriebsbedingte Verluste im Festlager der Zwischenwelle 80 auf.
Demzufolge hat ein noch nicht an die Kurbelwelle 1 montiertes Hybridmodul auch nur ein Wälzlager. Damit beim Transport des Hybridmoduls weder dieses Lager, noch die elektrische Maschine 30 durch zu starkes Verkippen der Zwischenwelle 80 und des damit verbundenen Rotorträgers 70 beschädigt wird, ist die Verkippung der Zwischenwelle 80 auf ein zulässiges Maß zu begrenzen. Dies kann durch einen von der Zwischenwellenlagerung 84 axial beabstandeten Anschlag erfolgen. In der in Figur 10 dargestellten Ausführungsform ist zu diesem Zweck eine Anschlaghülse 270 vorgesehen, die zwischen der Stützwand 21 bzw. dem mit der Stützwand 21 verbundenen Gehäuse des Trennkupplungsbetätigungssystems 17 und der Zwischenwelle 80 angeordnet ist. Die Anschlaghülse 270 ist derart ausgebildet und angeordnet, dass sich die Zwischenwelle 80 an ihr im Transportzustand abstützen kann, wodurch die maximale Verkippung der Zwischenwelle 80 auf ein zulässiges Maß begrenzt wird. Im komplett montierten Zustand des Hybridmoduls, in dem die Zwischenwelle 80 durch die zusätzliche Lagerung 85 an der Kurbelwelle 1 exakt ausgerichtet ist, ist die Anschlaghülse 270 nicht mehr wirksam und bildet keine Reibstelle aus.

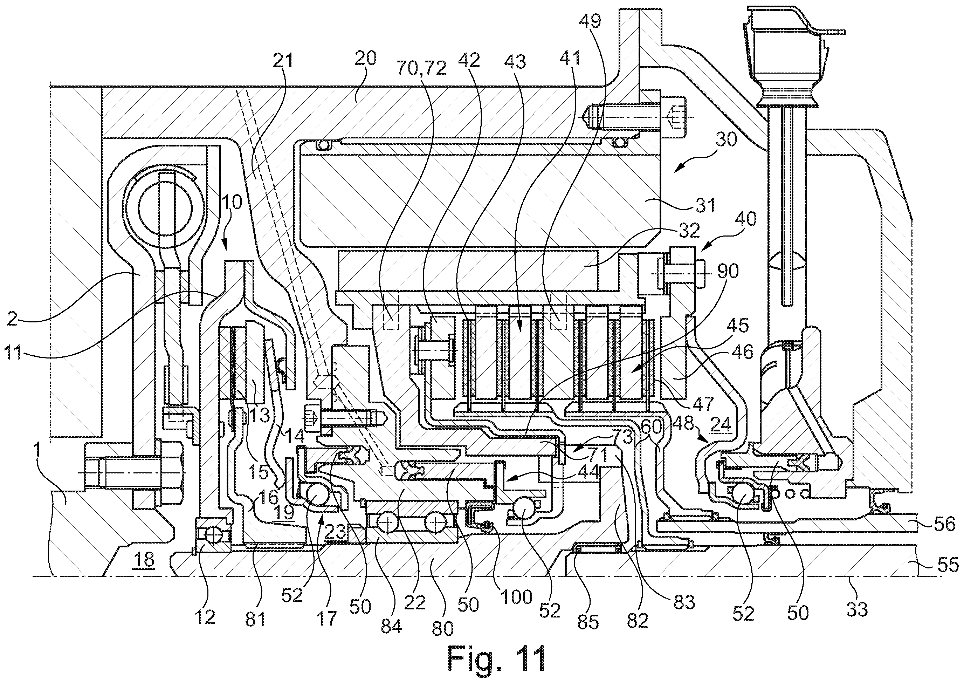

Zwecks effizienter Wärmeabfuhr aus dem Hybridmodul sowie zur weiteren Verringerung von Schleppverlusten in Lagern und Kupplungen können einige Kupplungen des Hybridmoduls nass und einige trocken betrieben werden. Da die in der Trennkupplung 10 auftretende Reibeenergie meist deutlich geringer ist als die in den beiden Teilkupplungen der Doppelkupplungsvorrichtung 40, ist eine sinnvolle Ausführungsform des Hybridmoduls die Verwendung einer trockenlaufenden Trennkupplung 10 und einer nasslaufenden Doppelkupplungsvorrichtung 40. Aufgrund der bereits vorgestellten Ausführungsform eines Hybridmoduls mit sehr weit radial nach innen verlaufender Stützwand 21, die lediglich von der Zwischenwelle 80 durchdrungen wird, bestehen gute Voraussetzungen für eine dichtende Trennung eines Nassraumes 24 und eines Trockenraumes 23 des Hybridmoduls. Die Stützwand 21 kann demzufolge auch als Trennwand oder Trennwandbaugruppe bezeichnet werden.
In den in den Figuren 11,12 und 13 dargestellten Ausführungsformen ist eine Dichtung 100 in Form eines Radialwellendichtringes zwischen einem mit der Stützwand 21 mechanisch fest verbundenen Gehäuse des Trennkupplungsbetätigungssystems 17 und der Zwischenwelle 80 vorgesehen, mit der der Trockenraum 23 vom Nassraum 24 flüssigkeitsdicht getrennt ist.
Alternativ kann die Dichtung 100 auch direkt zwischen der Stützwand 21 und der Zwischenwelle 80 angeordnet sein, so wie es in Figur 15 dargestellt ist. Aufgrund der dichten Heranführung der Stützwand 21 an die Zwischenwelle 80 kann die Dichtung 100 mit einem sehr geringen Durchmesser ausgeführt sein, was die Dichtungsreibung reduziert. Die Dichtung 100 kann auf jeder der beiden axialen Seiten der Zwischenwellenlagerung 84 angeordnet sein. Eine bevorzugte Anordnung der Dichtung sieht vor, dass sich die Zwischenwellenlagerung 84 im Nassraum 24 befindet und derart durch das Kühlöl im Nassraum 24 geschmiert werden kann, was zu einer weiteren Verringerung der Schleppverluste führt.
Dabei ist die Erfindung nicht auf die Anordnung der Doppelkupplungsvorrichtung 40 im Nassraum 24 und der Trennkupplung 10 im Trockenraum 23 eingeschränkt, sondern der Trockenraum 23 sowie der Nassraum 24 können auch umgekehrt den beiden Kupplungsvorrichtungen zugeordnet sein.

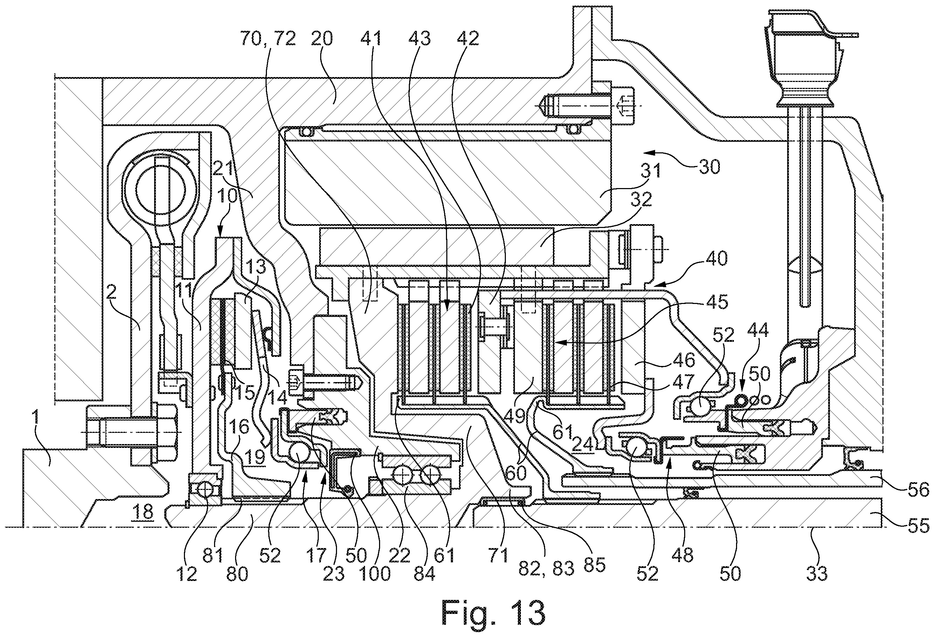

Die dargestellten, mit einer Dichtung 100 ausgestalteten Ausführungsformen des Hybridmoduls sind mit allen anderen, auf die Reduzierung von Schleppverlusten ausgerichteten Ausgestaltungsformen kombinierbar. Figur 13 zeigt eine weitere Ausgestaltungsform, in der die Teilkupplungen 41,45 der Doppelkupplungsvorrichtung 40 beide von getriebeseitig angeordneten Betätigungssystemen 44,48 betätigt werden. Im Gegensatz zu den bisher vorgestellten Ausführungsvarianten sind hier die Betätigungssysteme 44,48 radial geschachtelt in Bezug zueinander angeordnet.

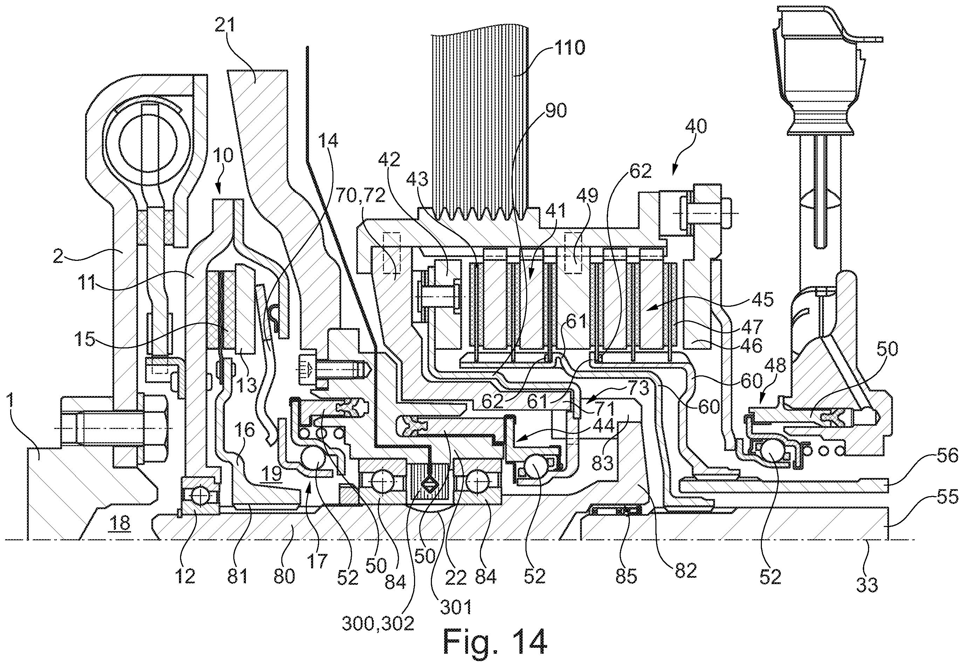

Figur 14 zeigt eine weitere spezielle Ausführungsform des Hybridmoduls, bei der der Rotor der elektrischen Maschine nicht direkt mit dem Rotorträger gekoppelt ist. Hier ist ein nicht dargestellter Rotor eines Elektromotors mit einem Getriebe 110, von dem hier nur ein Umschlingungsmittel dargestellt ist, mit dem Rotorträger 70 und somit mit der Doppelkupplungsvorrichtung 40 verbunden. Hier ist also der Rotorträger 70 als eine Riemenscheibe ausgeführt. Die generelle Funktionsweise des Hybridmoduls bleibt gleich, wobei sich lediglich die Position der elektrischen Maschine in Bezug auf die Doppelkupplungsvorrichtung 40 geändert hat. Statt einem hier angedeuteten achsparallelen Getriebe 110 kann auch ein Winkelgetriebe angeordnet sein, welches eine rotatorische Bewegung des Rotors der elektrischen Maschine winkelversetzt auf den Rotorträger 70 übertragen kann.

Um die elektrische Maschine 30 exakt bestromen zu können, muss eine Steuereinheit des Hybridmoduls und / oder des Elektromotors die Winkellage des Rotors 32 kennen. Zu diesem Zweck weist das Hybridmodul einen Winkellagegeber 300 auf. Dieser Winkellagegeber 300 ist in unmittelbarer Nähe der Lagerung des Rotorträgers 70, die in den meisten Ausführungsformen der Zwischenwellenlagerung 84 entspricht, angeordnet. Der Winkellagegeber 300 kann bei Anordnung auf der Zwischenwelle 80 die Relativ-Winkelposition der Zwischenwelle 80 in Bezug zur Stützwand 21 ermitteln, oder umgekehrt.
Zu diesem Zweck kann der Winkellagegeber 300 mindestens ein Geberelement 301 aufweisen, welches zum Beispiel an oder auf der Zwischenwelle 80 fest angeordnet ist, sowie ein Detektionselement 302 aufweisen, welches stationär an der Stützwand 21 angeordnet ist. Das Detektionselement 302 misst die Winkelbewegung des Geberelementes 301.
Durch die unmittelbare Nähe zur Lagerung des Rotors machen sich Lagetoleranzen einzelner Bauteile des Hybridmoduls in axialer und/oder radialer Richtung sowie Schwingungen zwischen den Bauteilen oder Baugruppen nicht oder nur unwesentlich in der Detektion der Winkellage bemerkbar. Dies erleichtert die Auslegung des Winkellagegebers 300 und reduziert dessen Volumen sowie dessen Kosten.
Der Winkellagegeber 300 kann neben einzelnen Wälzlagern, die die Zwischenwellenlagerung 84 ausbilden, angeordnet sein, so wie es in Figur 15 dargestellt ist. Alternativ dazu kann der Winkellagegeber 300 wie in Figur 14 dargestellt zwischen den Lagern der Zwischenwellenlagerung 84 angeordnet sein. Der Winkellagegeber kann mit den Lagern zusammen eine kompakte Baugruppe bilden. Das Geberelement 301 kann an einem Lagerinnenring oder Lageraußenring eines Lagers befestigt sein, und / oder in entsprechender Weise kann das Detektionselement 302 am jeweils anderen Lagerring angeordnet sein. Derartig lassen sich die Winkelpositionen der Lagerringe zueinander erfassen, die auch Winkelposition der Zwischenwelle 80 in Bezug zu einem Gehäuse und demzufolge auch der Winkelposition des Rotors 32 entspricht.

In Figur 15 ist eine Ausführungsform gezeigt, in der die Zwischenwelle 80 auf der Stützwand 21 gelagert ist, an der sich beidseitig je ein Gehäuse für ein Betätigungssystem anschließt. Der Winkellagegeber 300 ist ebenfalls an einer Stützwand 21 befestigt, wobei ein Bereich des Winkellagegebers 300 teilweise mit dem Gehäuse des Trennkupplungsbetätigungssystems 17 und teilweise mit der Stützwand 21 verbunden ist. Radial innen am Winkellagegeber befindet sich der empfindliche Sensorbereich, sodass dieser in unmittelbarer Nähe zur Zwischenwellenlagerung 84 angeordnet ist und auf ein in radialer Richtung beabstandetes und mit der Zwischenwelle 80 verbundenes Geberelement 301 misst. Alternativ zum radial oder axial beanstandeten Geberelement 301 kann das Detektionselement 302 auch auf eine mit der Zwischenwelle 80 verbundene Geberhülse messen oder direkt auf eine strukturierte oder magnetisierte Zwischenwelle 80, wie zum Beispiel in Figur 14 dargestellt. Das Detektionselement 302 und/oder das Geberelement 301 können Unterbrechungen, Aussparungen, Fortsätze, Dickenschwankungen, unterschiedlich magnetisierte Bereiche und/oder auf dem Umfang verteilte unterschiedliche Materialien aufweisen. Der Winkellagegeber 300 kann sich in einer Umfangsposition hinter dem Trennkupplungsbetätigungssystem 17 befinden, so dass auf eine einfache Weise eine Anschlussleitung 303 zwischen dem radial innen angeordneten Sensorbereich und einem oder mehreren radial außen am Trennkupplungsbetätigungssystem 17 angeordneten Anschlusssteckern geführt werden kann. Der Winkellagegeber 300 kann Bestandteil einer auch das Trennkupplungsbetätigungssystem 17 umfassenden Baugruppe sein. In alternativer Ausgestaltung ist der Winkellagegeber 300 in das Gehäuse eines Kupplungsbetätigungssystems z.B. des Trennkupplungsbetätigungssystems 17 integriert.

Die Ausgestaltungsformen Figur 15 zeigt in bereits beschriebener Weise ein Hybridmodul mit Trockenraum 23 und Nassraum 24. Der Winkellagegeber 300 ist vorzugsweise im Trockenraum 23 anzuordnen. Aufgrund seiner festen Verbindung mit der Zwischenwelle 80 kann er jedoch auch deren Winkelposition im Nassraum 24 detektieren und demzufolge auch die Position des Rotors 32 im Nassraum 24.
In entsprechender Weise kann vermieden werden, dass die Anschlussleitung 303 für den Winkellagegeber 300 durch den Nassraum zu führen ist, sodass keine Maßnahmen zur Abdichtung der Anschlussleitung 303 getroffen werden müssen.
In den Ausführungsformen gemäß der Figuren 1 bis 15 entspricht die Zwischenwellenlagerung 84 auch der Rotorträgerlagerung.

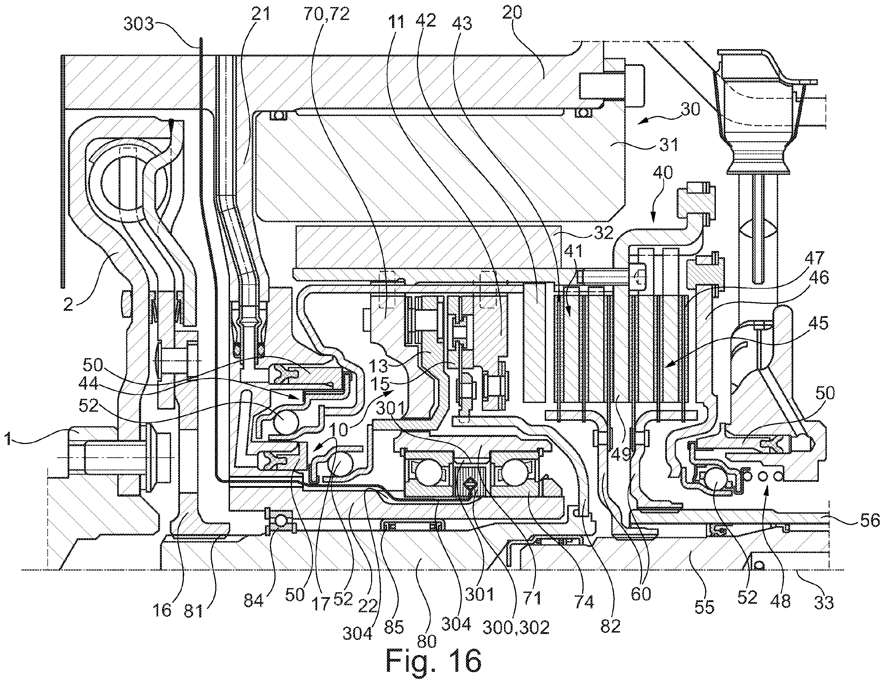

Die generelle Funktion des Winkellagegebers 300 ist die Detektion der Winkellage des Rotors 32 bzw. Rotorträgers 70 in Bezug zum Stator 31 bzw. Gehäuse 20. Diese Funktion es unabhängig davon zu erfüllen, ob der Rotor auf der Zwischenwelle 80 gelagert ist oder nicht. Somit kann der Winkellagegeber 300 in Ausführungsformen des Hybridmoduls auch in der Nähe der Rotorträgerlagerung 74 angeordnet sein, so wie es in Figur 16 dargestellt ist, wobei in der hier dargestellten Ausführungsform die bisher beschriebenen Maßnahmen zur Reduzierung der Schleppverluste, der Trennung von Nass- und Trockenräumen, die Ausgestaltungen der Trennkupplung und die Anordnung der Betätigungssysteme nicht zwingend umgesetzt werden müssen.
In der in Figur 16 dargestellten Ausführungsform ist der Rotor 32 der elektrischen Maschine 30 auf dem Rotorträger 70 angeordnet. Dieser stützt sich mittels der Rotorträgerlagerung 74 auf der Stützwand 21 bzw. deren in axialer Richtung sich erstreckenden Abschnitt 22 ab. Der Winkellagegeber 300 befindet sich dabei zwischen den beiden Wälzlagern der Rotorträgerlagerung 74. Dabei ist das Detektionselement 302 an dem Rotorträger 70 befestigt oder in den Rotorträger 70 integriert. Der Winkellagegeber 300 ist an der Stützwand 21 befestigt und erfasst die Winkelposition des radial um ihn herum positionierten Rotorträgers 70. Zu diesem Zweck ist der Rotorträger 70 mit einer an der radial inneren Seite angeordneten Struktur versehen. Die Anschlussleitung 303 zum Anschluss des Winkellagegeber 300 an eine hier nicht dargestellte Steuereinheit verläuft innerhalb des sich in axialer Richtung erstreckenden Abschnitts 22 der Stützwand 21 und durch die Stützwand 21 hindurch. Zu diesem Zweck ist in dem sich in axialer Richtung erstreckenden Abschnitt 22 der Stützwand 21 eine Nut 304 zur Aufnahme der Anschlussleitung 303 ausgeformt, sodass es an der radial Innenseite der Rotorträgerlagerung 74 verlaufen kann, ohne die Festigkeit der Rotorträgerlagerung 74 zu mindern.
Die erforderliche Länge der Nut 304 hängt vom Montagekonzept ab. Wird die Anschlussleitung 303 durch die Nut 304 geführt, nachdem die Rotorträgerlagerung 74 zum Beispiel mittels Aufpressen angeordnet wurde, muss die Nut 304 nur im unmittelbaren Bereich der Rotorträgerlagerung 74 vorhanden sein. In alternativer Ausgestaltung kann die Nut 304 auch bis zum axialen Ende des sich in axialer Richtung erstreckenden Abschnitts 22 der Stützwand 21 führen. Dies ermöglicht es, die Anschlussleitung 303 bereits vor der Montage der Rotorträgerlagerung 74 in die Nut 304 einzubringen.

Es wird somit ein Hybridmodul zur Verfügung gestellt, welches bei kompakter Bauform aufgrund geringer Schleppverluste in den Lagern energieeffizient betreibbar ist.
- 50: Kolben-Zylinder-Einheit
- 51: radiale Erstreckung
- 52: Betätigungslager
- 53: Federelement, Drucktopf
- 54: radialer Abstand
- 55: Erste Getriebeeingangswelle
- 56: zweite Getriebeeingangswelle
- 60: Trägereinrichtung
- 61: radialer Vorsprung
- 62: mechanische Verbindung
- 70: Rotorträger
- 71: axialer Abschnitt des Rotorträgers
- 72: radialer Abschnitt des Rotorträgers
- 73: Aussparung
- 74: Rotorträgerlagerung
- 80: Zwischenwelle
- 81: Steckverzahnung
- 82: radialer Abschnitt der Zwischenwelle
- 83: Verbindung von Zwischenwelle und Rotorträger
- 84: Zwischenwellenlagerung
- 85: zusätzliche Lagerung
- 86: Steckverzahnung
- 90: Verbindungselement, Zuganker
- 100: Dichtung
- 110: Getriebe
- 120: axial fixierte Kupplungsscheibe
- 200: erste Anpressplatte
- 201: erstes Anpresselement
- 210: zweite Anpressplatte
- 211: zweites Anpresselement
- 212: drittes Anpresselement
- 220: erste Kupplungsscheibe
- 230: zweite Kupplungsscheibe
- 240: axial wirkende Kraft
- 250: Stützkraft
- 260: Öffnungseinrichtung
- 262: Sicherungselement
- 263: Einstellscheibe
- 270: Anschlaghülse
- 300: Winkellagegeber
- 301: Geberelement
- 302: Detektionselement
- 303: Anschlussleitung
- 304: Nut

## Patentansprüche

1. Antriebsmodul für ein Kraftfahrzeug, insbesondere Hybridmodul für ein
Kraftfahrzeug zum Ankoppeln einer Verbrennungskraftmaschine, umfassend:
- eine elektrische Maschine (30) mit einem Rotor (32) zur Erzeugung eines Antriebsdrehmoments,
- einen mit dem Rotor (32) im Wesentlichen rotationsfest verbundenen Rotorträger (70), der zumindest radial rotatorisch gelagert ist, sowie
- einen Winkellagegeber (300) zur Messung der Winkelposition des Rotorträgers (70),
wobei der Winkellagegeber (300) derart angeordnet ist, dass mit ihm die Winkellage des Rotorträgers (70) oder eines im Wesentlichen rotationsfest mit dem Rotorträger (70) verbundenen Bauteils des Antriebsmoduls in Bezug zu einer gehäusefest angeordneten Stützwand (21) detektierbar ist, die zur radialen Abstützung der rotatorischen Lagerung des Rotorträgers (70) dient, wobei der Winkellagegeber (300) ein Geberelement (301) sowie ein Detektionselement (302) aufweist, wobei das Detektionselement (302) an der Stützwand (21) angeordnet ist und das Geberelement (301) an bzw. auf der Zwischenwelle (80) oder dem Rotorträger (70) angeordnet ist, **dadurch gekennzeichnet, dass** der Rotorträger (70) mittels einer mehrere einzelne Lager aufweisenden Rotorträgerlagerung (74) rotatorisch gelagert ist, und das Geberelement (301) und das Detektionselement (302) zwischen Lagern der Rotorträgerlagerung (74) angeordnet sind.

2. Antriebsmodul nach Anspruch 1, **dadurch gekennzeichnet, dass** es eine Trennkupplung (10) aufweist, mit der Drehmoment von einer Verbrennungskraftmaschine auf das Antriebsmodul übertragbar ist, und mit der das Antriebsmodul von der Verbrennungskraftmaschine trennbar ist, und eine Zwischenwelle (80) zur Übertragung eines Drehmomentes von der Verbrennungskraftmaschine zum Rotorträger (70) aufweist, wobei die Zwischenwelle (80) mit dem Rotorträger (70) im Wesentlichen rotationsfest verbunden ist und die Zwischenwelle (80) radial rotatorisch gelagert ist.

3. Antriebsmodul nach Anspruch 1 oder 2, **dadurch gekennzeichnet, dass** das Geberelement (301) ein Geberrad ist, welches auf der Zwischenwelle (80) bzw. auf oder an dem Rotorträger angeordnet ist.

4. Antriebsmodul nach einem der vorhergehenden Ansprüche, **dadurch gekennzeichnet, dass** das Antriebsmodul ein Gehäuse aufweist und der Winkellagegeber (300) ein Geberelement (301) sowie ein Detektionselement (302) aufweist, wobei das Antriebsmodul weiterhin eine Kupplungseinrichtung (40), insbesondere eine Trennkupplung oder Doppelkupplungsvorrichtung (40) mit einer ersten Teilkupplung (41) und einer zweiten Teilkupplung (45) aufweist, mit der Drehmoment von der elektrischen Maschine (30) und/ oder von der Trennkupplung (10) auf einen Antriebsstrang übertragbar ist,
sowie dass das Antriebsmodul ein Kupplungsbetätigungssystem zur Betätigung der Kupplungseinrichtung des Antriebsmoduls aufweist, welches in einem Gehäuseelement angeordnet ist, wobei das Detektionselement (302) in das Gehäuseelement des Kupplungsbetätigungssystems integriert ist.

5. Antriebsmodul nach einem der vorhergehenden Ansprüche, **dadurch gekennzeichnet, dass** das Geberelement (301) ein integraler Bestandteil des Bauelementes ist, an dem es angeordnet ist.

6. Antriebsmodul nach einem der vorhergehenden Ansprüche, **dadurch gekennzeichnet, dass** der Rotorträger (70) mittels einer Rotorträgerlagerung (74) rotatorisch gelagert ist und dass das Geberelement (301) und das Detektionselement (302) in bzw. an der Rotorträgerlagerung (74) angeordnet bzw. ausgebildet sind, sodass Rotorträgerlagerung (74) und Winkellagegeber (300) zusammen eine Baueinheit bilden.

7. Antriebsanordnung für ein Kraftfahrzeug mit einer Verbrennungskraftmaschine und einem Antriebsmodul gemäß einem der Ansprüche 1 bis 6 sowie mit einem Getriebe, wobei das Antriebsmodul mit der Verbrennungskraftmaschine und dem Getriebe mechanisch über Kupplungen (10,40) des Antriebsmoduls verbunden ist.

## Claims

1. A drive module for a motor vehicle, in particular a hybrid module for a motor vehicle for coupling an internal combustion engine, comprising:
- an electric machine (30) with a rotor (32) for generating drive torque,
- a rotor support (70) which is connected to the rotor (32) in an essentially rotationally fixed manner and which is mounted so that it can rotate at least radially, and
- an angle resolver (300) for measuring the angular position of the rotor support (70),
wherein the angle resolver (300) is arranged in such a way that it can be used to detect the angular position of the rotor support (70) or a component of the drive module which is essentially rotationally fixed to the rotor support (70) in relation to a support wall (21) fixed to the housing, which is used for radial support of the rotary bearing of the rotor support (70), wherein the angle resolver (300) has a transmitter element (301) and a detection element (302), wherein the detection element (302) is arranged on the support wall (21) and the transmitter element (301) is arranged on or at the intermediate shaft (80) or the rotor support (70), **characterised in that** the rotor support (70) is rotatably mounted by means of a rotor support bearing (74) having a plurality of individual bearings, and the transmitter element (301) and the detection element (302) are arranged between bearings of the rotor support bearing (74).

2. The drive module according to claim 1, **characterised in that** it has a separating clutch (10), with which torque can be transmitted from an internal combustion engine to the drive module, and with which the drive module can be separated from the internal combustion engine, and which has an intermediate shaft (80) for transmitting torque from the internal combustion engine to the rotor support (70), wherein the intermediate shaft (80) is connected to the rotor support (70) essentially in a rotationally fixed manner and the intermediate shaft (80) is radially mounted in a rotational manner.

3. The drive module according to claim 1 or 2, **characterised in that** the transmitter element (301) is a transmitter wheel, which is arranged on the intermediate shaft (80) or on or at the rotor support.

4. The drive module according to any one of the preceding claims, **characterised in that** the drive module has a housing and the angle resolver (300) has a transmitter element (301) and a detection element (302), wherein the drive module also has a clutch device (40), in particular a separating clutch or double clutch device (40) with a first partial clutch (41) and a second partial clutch (45), with which torque from the electrical machine (30) and/or from the separating clutch (10) can be transmitted to a drive train, and **in that** the drive module has a clutch actuation system for actuating the clutch device of the drive module, which is arranged in a housing element, wherein the detection element (302) is integrated into the housing element of the clutch actuation system.

5. The drive module according to any one of the preceding claims, **characterised in that** the transmitter element (301) is an integral part of the component on which it is arranged.

6. The drive module according to any one of the preceding claims, **characterised in that** the rotor support (70) is rotatably mounted by means of a rotor support bearing (74) and that the transmitter element (301) and the detection element (302) are arranged or formed in or on the rotor support bearing (74) so that the rotor support bearing (74) and the angle resolver (300) together form a structural unit.

7. A drive arrangement for a motor vehicle having an internal combustion engine and a drive module according to any one of claims 1 to 6, as well as a gearbox, wherein the drive module is mechanically connected to the internal combustion engine and to the gearbox by means of clutches (10, 40) of the drive module.

## Revendications

1. Module d'entraînement pour un véhicule à moteur, en particulier module hybride pour un véhicule à moteur permettant de coupler un moteur à combustion interne, comprenant :
- une machine électrique (30) comportant un rotor (32) pour générer un couple d'entraînement,
- un support de rotor (70) raccordé au rotor (32) d'une manière sensiblement fixe en rotation, lequel est monté au moins d'une manière radialement rotative, et
- un capteur de position angulaire (300) pour mesurer la position angulaire du support de rotor (70),
dans lequel le capteur de position angulaire (300) est agencé de telle sorte que, au moyen dudit capteur, la position angulaire du support de rotor (70) ou d'un composant du module d'entraînement, lequel est sensiblement fixé en rotation au support de rotor (70) par rapport à une paroi de support (21) fixée au boîtier, peut être détectée, ladite position servant au support radial du palier rotatif du support de rotor (70), dans lequel le capteur de position angulaire (300) comporte un élément capteur (301) ainsi qu'un élément de détection (302), dans lequel l'élément de détection (302) est agencé sur la paroi de support (21) et l'élément capteur (301) est agencé sur un arbre intermédiaire (80) ou le support de rotor (70), **caractérisé en ce que** le support de rotor (70) est monté de manière rotative au moyen d'un palier de support de rotor (74) comportant une pluralité de paliers individuels, et que l'élément capteur (301) et l'élément de détection (302) sont disposés entre les paliers du palier de support de rotor (74).

2. Module d'entraînement selon la revendication 1, **caractérisé en ce que** ledit module d'entraînement comporte un embrayage de séparation (10) à l'aide duquel le couple peut être transmis d'un moteur à combustion interne au module d'entraînement et à l'aide duquel le module d'entraînement peut être séparé du moteur à combustion interne, et un arbre intermédiaire (80) pour transmettre le couple de rotation du moteur à combustion interne au support de rotor (70), dans lequel l'arbre intermédiaire (80) est raccordé au support de rotor (70) d'une manière sensiblement fixe en rotation et l'arbre intermédiaire (80) est monté d'une manière radialement rotative.

3. Module d'entraînement selon la revendication 1 ou 2, **caractérisé en ce que** l'élément capteur (301) est une roue de détection disposée sur l'arbre intermédiaire (80) ou sur le support de rotor.

4. Module d'entraînement selon l'une quelconque des revendications précédentes, **caractérisé en ce que** ledit module d'entraînement comporte un boîtier et le capteur de position angulaire (300) comporte un élément capteur (301) ainsi qu'un élément de détection (302), dans lequel ledit module d'entraînement comporte en outre un dispositif d'accouplement (40), en particulier un embrayage de séparation ou un dispositif à double embrayage (40), comportant un premier embrayage partiel (41) et un second embrayage partiel (45), à l'aide duquel le couple de rotation peut être transféré de la machine électrique (30) et / ou de l'embrayage de séparation (10) à une chaîne cinématique, ainsi que le module d'entraînement comporte un système d'actionnement d'embrayage pour actionner le dispositif d'embrayage du module d'entraînement, lequel est agencé dans un élément boîtier, dans lequel l'élément de détection (302) est intégré dans l'élément boîtier du système d'actionnement d'embrayage.

5. Module d'entraînement selon l'une quelconque des revendications précédentes, **caractérisé en ce que** l'élément capteur (301) fait partie intégrante du composant sur lequel il est disposé.

6. Module d'entraînement selon l'une quelconque des revendications précédentes, **caractérisé en ce que** le support de rotor (70) est monté de manière rotative au moyen d'un palier de support de rotor (74) et que l'élément capteur (301) et l'élément de détection (302) sont disposés ou conçus dans ou sur le palier de support de rotor (74) de telle sorte que le palier de support de rotor (74) et le capteur de position angulaire (300) forment ensemble une unité structurale.

7. Système d'entraînement pour véhicule à moteur doté d'un moteur à combustion interne et d'un module d'entraînement selon l'une quelconque des revendications 1 à 6, ainsi que d'une transmission, le module d'entraînement étant raccordé mécaniquement au moteur à combustion interne et à la transmission au moyen des embrayages (10, 40) du module d'entraînement.
